(19)

Europäisches
Patentamt
European
Patent Office
Office européen
des brevets

(11) **EP 2 858 015 A1**

(12) **EUROPEAN PATENT APPLICATION**

(43) Date of publication:
08.04.2015 Bulletin 2015/15

(51) Int Cl.:
*G06Q 10/04* (2012.01)       *G06Q 10/06* (2012.01)
*G06Q 50/06* (2012.01)       *H02J 3/14* (2006.01)
*H02J 3/38* (2006.01)

(21) Application number: 13187457.0

(22) Date of filing: 04.10.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Building Research Establishment Ltd
Garston
Watford
Hertfordshire WD25 9XX (GB)**

(72) Inventors:
• **Philimis, Panayiotis
2643 Nicosia (CY)**

• **Sakkas, Nikos
15344 Gerakas (GR)**
• **Batic, Marko
11060 Beograd (RS)**
• **Garvin, Stephen
Watford, WD25 9XX (GB)**

(74) Representative: **Murnane, Graham John
Murgitroyd & Company
Scotland House
165-169 Scotland Street
Glasgow G5 8PL (GB)**

(54) **System and method for simulation, control and performance monitoring of energy systems**

(57)    A system for designing, planning, controlling, optimising and evaluating use of energy by an energy system in a facility, said facility being selected from a building, a plurality of buildings, an outdoor area or a combination thereof, the system comprising at least a static simulator for the creation of and/or the selection of an energy system configuration and for the subsequent simulation of the energy consumption and/or production based on the selected configuration, a sensor network, a controller obtaining real time information from a sensor network connected to various appliances, and information originating from the static and dynamic simulator to control the energy management of the system, a per- formance module for monitoring the performance of an energy system based on operational data from the controller, wherein the performance module runs a number of applications related to policy conformance (building energy footprint, support for emission trading, etc.) and to real time energy module standard performance evaluation, a dynamic simulator predicting at predetermined intervals data corresponding to the consumption and/or production and cost of an energy resource in the energy system, said energy resource being selected from, electricity, oil, gas, water or other energy resource; and a user interface.

EP 2 858 015 A1

**Description**

**Field of Invention**

The present invention relates to a system and method for simulation, control and performance monitoring of energy systems, and in particular of conventional, alternative and/or renewable energy systems in buildings and/or energy infrastructures.

More specifically the present invention relates to the components of a system for simulation, control and performance monitoring of energy systems, and the use of such components, either alone or in combination, the components including a static simulator, a dynamic simulator, a distributed controller, a user interface, a sensor network, a performance module for monitoring the real-time performance of the energy system, an integration module for enabling communication and data exchange between the energy system and third-party systems, and a data storage module for storing data associated with the energy system.

**Background**

The following terms are used in this disclosure:

Energy system and energy system configuration: An energy system is comprised of a plurality of components that are required to produce or/and store any form of energy (such as electrical, thermal etc.) and an energy system configuration is the combination of more than one energy systems working together (i.e. hybrid).

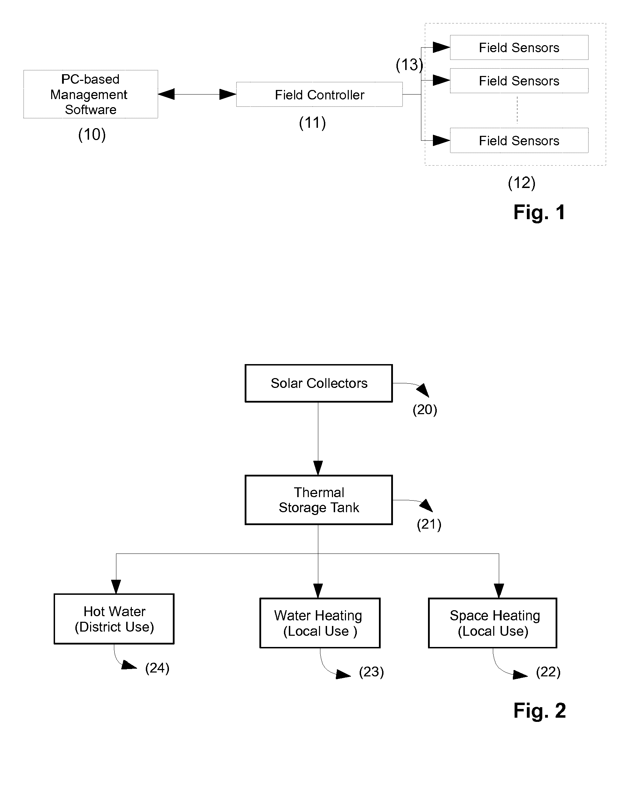

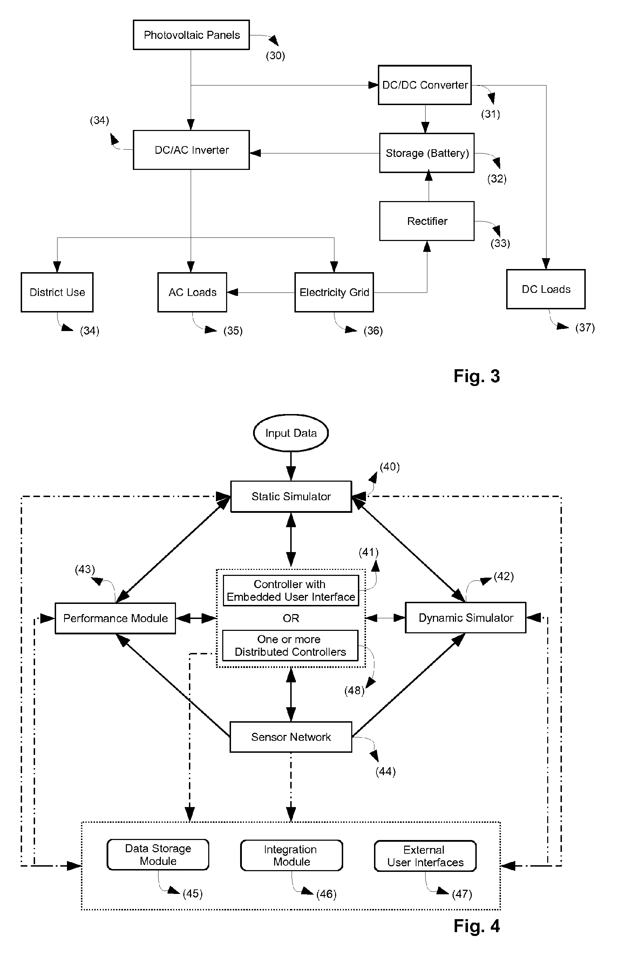

Two examples of energy system configurations are shown in Fig. 2 and Fig. 3. Fig .2 illustrates a configuration in which thermal solar collectors are used for heating water and space. Fig. 3 illustrates a configuration in which photovoltaic panels are used for local loads (with storage) and for supply to a network.

Energy sub-system: An energy system is usually comprised of a plurality of sub-systems that are necessary to operate. Sub-systems can be a system comprised of one or more components. For example a Photovoltaic is a renewable energy system that is comprised of 2 sub-systems; the Photovoltaic (PV) solar panels and inverter to convert the direct current (DC) output of a photovoltaic solar panel into a utility frequency alternating current (AC) that can be fed into a commercial electrical grid or used by a local, off-grid electrical network.

Conventional energy system: a system that produces energy from fossil-fuel

Alternative energy system: a system that produces energy from biofuel, biogas, biomass etc.

Renewable energy system: a system that produces energy from solar PV, solar thermal, wind turbine, geothermal, hydro turbine etc.

The term energy system is used in this disclosure to refer to a system in a building, plant or installation which uses energy. Most residences and commercial establishments require electricity and fuels which are provided by connections to local utilities or provided by fuel suppliers. Electricity is typically provided from a utility grid and it can be used to power electric appliances. Natural gas is typically provided from a natural gas utility, and other fuels such as liquefied gas, liquid and solid fuels are provided by suppliers and are used for heating and other purposes. Additionally, a user might supplement conventional energy sources, or possibly provide complete independence, with alternative / renewable energy sources like solar, wind, geothermal, hydro, hydrogen etc. The use of alternative sources of energy may require energy storage for periods when the alternative energy source is not producing energy. (e.g. on a cloudy day for solar power). This can be done by storing electricity in batteries. Electricity can also be used to produce hydrogen, through electrolysis or other processes and hydrogen can be converted back to electricity through the use of fuel cells.

The above energy sources are not interchangeable as appliances are designed to run on a particular type of energy source (e.g. an oil fired boiler or an electric furnace). As a result the user is subject to the price fluctuations of the various energy sources. In order to change the energy profile the user would have to change the appliances. However alternative appliances can be used as in the case of heating interior spaces with the use of split unit heat pumps instead of an oil-fired central heating system. Therefore there exists a need to provide an improved method and system for optimising the functionalities of utility-supplied and conventional, alternative or renewable energy sources and concerns the optimal design and selection of such energy systems, the optimal decisions of the energy systems controller and the optimal energy systems performance. The optimisation shall be based on one or a combination of user requirements such as minimisation of energy costs, minimisation of carbon emissions, minimum initial energy systems investment, minimum return on investment (ROI), highest energy systems production etc.

Energy System's Performance

Performance data for energy systems and their sub-systems are commonly determined through laboratory tests, following a procedure according to standards. For example, performance parameters describing energy quantities for a solar PV system and its components have been established by the International Energy Agency (IEA) Photovoltaic Power Systems Program and are described in the standard IEC 61724.

Solar PV Performance Monitoring:

International Standard IEC 61724:1998 (Title: Photovoltaic System Performance Monitoring - Guidelines for Measurement, Data Exchange, and Analysis)

Wind Turbine Performance Monitoring:

International Standard IEC 61400-12-1:2006 (IEC, Wind turbines - Part 12-1: Power performance measurements of electricity producing wind turbines)

Solar Thermal System Performance Monitoring:

European Standard EN 12975-2:2006 (Title: Thermal solar systems and components - Solar collectors - Part 2: Test methods), and
International Standard ISO 9459-2:1995 (Title: Solar heating - Domestic water heating Systems - Part 2: Outdoor test methods for System Performance characterization and yearly Performance prediction of solar--only Systems)

Geothermal Pumps Performance Monitoring:

European Standard EN 14511-3:2011 (Title: Air conditioners, liquid chilling packages and heat pumps with electrically driven compressors for space heating and cooling)

Inverter Performance Monitoring:

International Standard IEC 61683:1999 (Title: Photovoltaic systems - Power conditioners - Procedure for measuring efficiency),
UL Standards, UL 1741:2005 (Title: The Standard For Inverters, Converters and Controllers For Use In Independent Power Production Systems)

Battery Performance Monitoring:

International Standard IEC 62124:2004 (Title: Photovoltaic (PV) stand-alone systems - Design verification)

Accurate and consistent evaluation of energy systems' performance after installation is critical for equipment and component manufacturers, since a performance evaluation is a benchmark of quality for an existing product. For energy system installers and operators; monitoring of an energy system performance is an indication of the good operation of the system therefore a more efficient maintenance and early warning and fault detection can be achieved. In the case of end-users, monitoring the performance is essential for evaluating their investment and for maximizing their financial benefit.

In the case of national energy regulatory authorities, the real-time performance is the only means of evaluating the effectiveness of a state grant for an installed alternative or renewable energy system since it provides a more accurate prediction as compared to the feasibility studies of the return they have in terms of $CO_2$ emissions avoided. Moreover, for the energy transmission system operator is essential to have a real-time prediction of the power produced from an energy system in order to manage more efficiently the energy distribution. For this reason, an accurate prediction of the electricity produced from photovoltaic and wind parks is important when trying to reduce demand during the high cost peak usage periods. Such a task is not straight forward since the production in the case of renewable systems depends on the weather conditions which affect also the performance of each sub-system.

Currently, real-time in-situ monitoring is more common to renewable energy systems such as solar PV and wind turbines. Most commercial products for monitoring renewable installations provide basic information on the energy produced and also some functionality on management of such systems e.g. maintenance and fault analysis. For example in the case of solar PV, monitoring systems are usually offered by inverter manufacturers. Some more complete and inverter model - independent solutions are offered, but still not associated with sensors for monitoring the performance for all sub-systems (i.e. PV modules and inverters) and therefore it is heavily dependent on acquiring electricity production data from the inverter. Another limitation of these systems is that they do not provide a system that can monitor a plurality of renewable energy systems connected together, such as solar thermal, solar PV, geothermal, wind turbine etc.

Facilities of various kinds and purposes (residential, commercial, industrial etc.) use extensively energy consuming and energy production devices and systems (i.e. Heating-Cooling-Ventilation, Hot Water Production, Photovoltaic etc.). Currently only some large commercial and industrial facilities are able to use centralized building energy management systems for monitoring and control by applying advanced logic. Many facilities do not apply such solutions due to either their high cost or due to the lack of the proper cabling for system deployment.

These limitations are caused by the commonly used architecture of centralized Building Energy Management Systems (BEMS) as illustrated in Fig.1. The general BEMS architecture comprises of bulk, rack or distribution board mounted controllers 11, wired connections 13 with the field sensors 12, and a centralized PC-based management and monitoring software 10 that hosts all the system logic, running algorithms and performing the necessary calculations.

Most of the energy consuming systems used in residential and small sized commercial or industrial facilities, are provided with their own controllers, which apply only basic control logic and lack of communication and integration capabilities. They are usually mislead by false or inaccurate readings due to incorrect placement (of the actual controller or their connected sensors) within the facilities and thus proceed to non-efficient control of the systems. They also have limited access to information of the installed environment and the users behaviour and energy usage pattern. They usually have access only to locally installed or embedded sensors (i.e. temperature and humidity) and cannot utilize detailed localized meteorological and environmental data. Intercommunication among similar controllers installed within the same facility is also not applicable.

Building energy consumption has climbed to over 38% of all energy used in today's commercial facilities. Add the spiralling cost of energy to the mounting impact of its production on our environment and one comes to a simple conclusion: turning lights off in unoccupied spaces is not only an option but a necessity. Technology that already is used in order to record movement in a space is presented below:

- LED sensors; These include 2 parts, light transmitter that emits light beam to the receiver. If the receiver receives a beam decreased, at most, by 90% of the initial beam a human transit (but not direction identification) is noted.

- Active ultrasonic sensors; These emit ultrasonic waves. Space reflects these waves and sensor receives wave reflection as a disturbance during a human transit.

- Passive infrared sensors (PIR sensors); These include PIR elements and identify movement. PIR elements recognize the disturbance in thermal radiation in the space when a "hot object" is entered or exited. In this way only movement is recognized and not direction. In order to identify direction of an object in a space a pair of PIR sensors is required.

The main drawback of such technologies is the high cost.

## SUMMARY OF DISCLOSURE

According to a first aspect of the present invention there is provided a system for simulation, control and performance monitoring of an energy system integrated within building and/or energy infrastructure, comprising one or more of the following sub-systems:

a) a static simulator for the creation of and optimal selection from a plurality of pre-defined energy system configurations,
b) a dynamic simulator for predicting at predetermined intervals (for example on an hourly basis) the use and cost of a resource (for example electricity, oil, water, etc.) at a building or other facility (for example neighbourhood, outdoor area, etc.),
c) a distributed controller for the intelligent and optimal planning of the energy production, storage and consumption within any energy system configuration, obtaining by any means (such as the web) (a) real-time data from a sensor network or (b) real-time or/and historical data from other distributed controllers which can provide useful data to optimize its control and efficiency performance
d) a plurality of user interfaces
e) a sensor network comprising a plurality of sensors for (a) monitoring energy system parameters, building stock parameters, meteorological parameters, building occupancy, user actions etc. (b) performing control actions on energy systems, appliances, building components etc.
f) a performance module for monitoring the real-time performance of an energy system configuration or sub-system or/and a building in terms of energy efficiency, carbon emissions, indoor air quality, thermal comfort etc.
g) an integration module, and
h) a data storage module.

The energy of the energy system can include conventional, alternative and/or renewable energy.

According to another aspect of the invention there is provided a system and method for designing, planning, controlling, optimising and evaluating the use of conventional, alternative and renewable energy sources, the system and method comprising:

- carrying out a simulation of the energy profile of the user using a static simulator, which may be software running on a desktop or web application, a mobile devices etc,
- using a controller hardware system which reads and processes information from a sensor network connected to the various appliances, and information originating from the static simulator to control the energy management of the system.
- using performance module software which reads energy module/ building operational data from the controller, runs a number or applications related to policy conformance (building energy footprint, support for emission trading, etc.) and real time energy module (e.g. sun collector) standard performance evaluation,
- running a dynamic simulation of the energy system using dynamic simulator software that can be used to accurately predict at an hourly basis (or even lower resolution) the use and cost of a resource (electricity, oil, water, etc.) at a building or other extended area (a plurality of buildings, neighbourhood, outdoor area, etc.), wherein the dynamic simulator software may be embedded in any sub-system device such as controller, sensor network, or user interface etc.

According to another aspect of the invention there is provided a method for carrying out a simulation of the energy profile, (supply, storage and demand) of a building or group of buildings using the static simulator which is interfaced and receives information from the controller, meteorological data (e.g., solar and wind) at different locations of the world and databases of energy costs and pricing information. The static simulator may operate as a standalone application, suitable for design/retrofit purposes (where no controller or even building is in place) or as a provider of set-points for the controller.

According to another aspect of the invention there is provided a method of controlling the energy management of a building or group of buildings using the controller which is an intelligent electronic hardware system installed in buildings. The controller may possess the following communication features:

- a TCP/ IP port allowing it to be managed and monitored over the web.
- an interface means, for example typical wired I/O (digital or analogue), which may also be designed to interface with WSN (wireless sensor networks), such as the ZigBee protocol, as well as web based communication methods
- compliance with key building protocols, used in building automation standards such as the EIB (European Installation Bus).
- the controller is able to control and optimize the supply, storing and demand side of the building's energy infrastructure, and the controller decision module may be driven by neural network processing

According to another aspect of the invention there is provided a method of managing the building energy information and knowledge using a performance module, which is a software designed to provide to process and produce data necessary to draft, modify and enact policy regulation changes. This data will enable the evaluation and comparison of different energy producing modules. The performance module:

- reads energy module/ building operational data from the controller and
- runs a number or applications related to:

    i. policy conformance (building energy footprint, support for emission trading, etc.), and
    ii. real time energy module (e.g. solar collector) standard performance evaluation.

According to another aspect of the invention there is provided a method of communication between the above systems and sub-systems by means of a user interface> The user interface may be any type of computer interface, wearable (such as watch, glass etc.), mobile (such as tablet. mobile phone etc.) or desktop, from which a user will be able to monitor, operate and control an energy system or/and a sub-system or/and sub-system's component. The user interface can be integrated within a controller, or other devices such as mobile, tablet, PC etc. It can also be connected through a web-based platform.

According to another aspect of the invention there is provided a system and method of collection and transmittance of information from and to the various above systems and sub-systems by means of a sensor network comprising a plurality of sensors for (a) monitoring energy system parameters, building stock parameters, meteorological parameters, building occupancy, user actions etc. and (b) performing control actions on energy systems, appliances, building components etc.

According to another aspect of the invention there is provided a system and method of establishing the communication and data exchange between any one of the present invention's sub-systems and third-party systems by means of an integration module which is a device incorporating open communication protocols. Each sub-system may be able to operate and be deployed either as a stand-alone system or in combination with any number of sub-systems, incorporating fully functional and deployable systems fulfilling any user requirement and need arising from all the possible configurations generated from static simulator suitable for any type of infrastructure.

According to another aspect of the invention there is provided a system and method of collection of data from any of the systems and sub-systems and the storage of the data either in the cloud or in memory systems linked to any of the other sub-systems by means of a data storage module, which may incorporate hardware and/or software sub-systems.

According to another aspect of the invention there is provided a static simulator comprising a solar thermal algorithmic model for simulating the dynamic phenomenon of a solar heating system, wherein the simulator calculates periodically (typically every hour or less) the maximum and mean temperatures of hot water in a storage tank, the quantity of water at a predetermined desired temperature, and the thermal energy required outputs of the system corresponding to one or both of hot water and space heating. Typically the dynamic phenomenon of a solar heating system arises from an unsteady energy balance.

The static simulator may further comprise a database of meteorological and cold water data. The data may be periodic data (typically data corresponding to hourly intervals or less). The data may be global, thereby enabling use of the static simulator globally. The static simulator may be used for optimal sizing of a solar heating system and combi-system based on the actual needs of the end user for hot water and space heating.

According to another aspect of the invention there is provided a static simulator comprising a geothermal algorithmic model for simulating a geothermal system, wherein the simulator calculates at high accuracy the ground loop outlet temperature $T_{m,o,}$ using historical meteorological data, flow circulation parameters, pipe system material properties and soil type. The static simulator is capable of accurate prediction of Ground Source Heat Pump correction factors, and thus better calculation of system efficiency (COP, EER).

According to another aspect of the invention there is provided a direction detection sensor, characterized in that it is able to identify mobility direction by means of a single PIR element whose signal is digitally processed in a PsoC processor. In the case of spaces with just one entrance the detection sensor can serve as a real time occupancy sensor, in conjunction with other aspects of the invention.

According to another aspect of the invention there is provided an occupancy sensor for use with other aspects of the invention, comprising a plurality of said direction detection sensors arranged at a plurality of points of entrance to a space whose occupancy is to be sensed, and a control module which uses the data from said plurality of direction detection sensors to generate a signal indicative of the occupancy and/or population of said space. The results indicated by said signal may be published to a user interface e.g. web application.

According to another aspect of the invention there is provided a method for controlling and monitoring the operation of energy systems in order to achieve and maintain the highest possible efficiency, deriving from optimized operation and minimum possible energy consumption, the method comprising:

- calculating theoretical optimal sizing and configuration of an energy system based on a simulation driven by a static simulator (for example the static simulator of the aspect above);
- using a distributed controller to adaptat the above mentioned optimal configuration;
- using the distributed controller to retrieve real-time operation parameters of the energy systems, real-time building stock and meteorological parameters, and real-time human interaction parameters from a sensor network (for example the sensor network of the aspect above) and/or from other distributed controllers;
- using the distributed controller to retrieve historical from other distributed controllers;
- retrieving results of the real time and dynamic simulation of the energy systems' operation driven by a dynamic simulator (for example the dynamic simulator of the aspect above) based on real-time and historical data from the distributed controller,
- sharing said results with the distributed controller 48, thereby enabling it to perform dynamic changes to its configuration.

The communication and data sharing among various distributed controllers 48 offers (a) the ability to manage large energy systems with their components deployed in extended or remote installations and (b) real-time access from each controller to all the required data to acknowledge the effect of the energy systems', under its supervision and control, to other energy systems or other areas of the facility, and thus perform dynamically configuration changes minimizing negative and maximizing positive effects.

According to another aspect of the invention there is provided a method for controlling and monitoring the operation of energy systems in order to achieve and maintain the highest possible efficiency, deriving from optimized operation and minimum possible energy consumption, the method comprising:

- the theoretical optimal sizing and configuration of energy systems deriving from a simulation driven by the static simulator 40
- the adaptation of the above mentioned optimal configuration by the controller 41
- the real-time (a) operation parameters of the energy systems (b) building stock and meteorological parameters and (c) human interaction parameters retrieved by the controller 41 from the sensor network
- the results of the real time and dynamic simulation of the energy systems' operation driven by the dynamic simulator 42 based on real-time and historical data retrieved from the controller 41, which are shared with the controller 41 enabling it to perform dynamic changes to its configuration

According to another aspect of the invention there is provided a system for controlling and monitoring the operation of energy systems with components installed (a) in a single facility and (b) a number of remote facilities and the optimization of their performance, the system comprising one or more distributed controllers 60, each distributed controller comprising:

a) an embedded processor 62 able to apply: adaptive algorithms, energy efficiency logic, time scheduling, alarms, trend logs, timers;

b) a plurality of embedded and/or attached and/or connected wired and/or wireless sensors 61 (i.e. temperature, humidity, light, airflow, pressure, occupancy etc.) for (a) obtaining parameters regarding the operation of the connected energy systems, the environment and the human interactions and (b) applying the control commands to the connected energy systems;

c) an RF communication module 63 utilising proprietary low-power wireless communication protocols (i.e. Lightwave RF, Z-Wave, Zigbee etc.) to enable the controller's bi-directional communication with a plurality of field sensors, distributed controller's and proprietary control devices;

d) an input module 64 with a plurality of physical input terminals for connecting the distributed controller with field wired sensors (i.e. current meters, temperature, humidity etc.) which enables the retrieval of various measurements i.e. indoor and outdoor environmental data, energy use data, user behaviour data etc. the input module will include of voltage and/or current analogue signal terminals and dry input digital signal terminals;

e) an output module 65 with a plurality of physical output terminals for performing control commands, deriving from: the embedded processor's analysis, the energy saving and adaptive control algorithms. the output module includes voltage and/or current analogue signal terminals, digital relay terminals and a plurality of IR blasters;

f) a voice command module 66 applying a plurality of noise cancellation microphones able to retrieve predefined voice commands from the users. commands will lead to the deployment of control commands from the embedded processor to the controller's communication modules and all the connected devices and systems;

g) a voice notification module 67 applying a plurality of noise cancellation microphones able to retrieve predefined voice commands from the users. commands will lead to the deployment of control commands from the embedded processor to the controller's communication modules and all the connected devices and systems;

h) an ethernet module 68 applying wireless and/or wired ethernet protocols for the communication of the distributed controller with other distributed controllers, the cloud services, user interface devices or other components and systems able to provide useful information towards optimizing its performance, such as the static simulator 40, the dynamic simulator 42 and the performance module 43.

i) an embedded 69 or/and external user interface 71, 72 which may include: a screen (such as LCD, LED, etc.) or a touch screen to display alarm messages and possibly metering and system status data (i.e. software version, IP address, connected devices status etc.) and a plurality of physical control buttons to allow possible manual configuration by the user.

## DESCRIPTION OF DRAWINGS

The invention will now be described with reference to the following drawings, in which:

Fig. 1 is a schematic drawing of the general architecture of conventional Building Energy Management System;
Fig. 2 is a schematic drawing of a typical energy system configuration of the present invention, in which thermal solar collectors heat up water and space;
Fig. 3 is a schematic drawing of a typical energy system configuration of the present invention, in which photovoltaic panels are used to supply local loads and storage as well as the network supply;
Fig. 4 is a schematic drawing of a system for simulation, control and performance monitoring of energy systems according to the present invention;

Fig. 5 is a schematic drawing of a typical energy system configuration of the present invention, utilising solar space heating and a hot water system;

Fig. 6 is a flow chart showing the input data and output results of a sloar thermal simulation according to the present invention;

Fig. 7 is a flow chart showing an algorithm used in an embodiment of the present invention;

Fig. 8 is a table showing output results for a space heating system operated according to the present invention in Nicosia, Cyprus;

Figs. 9 to 12 are plot results obtained from the simulation referred to in Fig. 8 and Table 3;

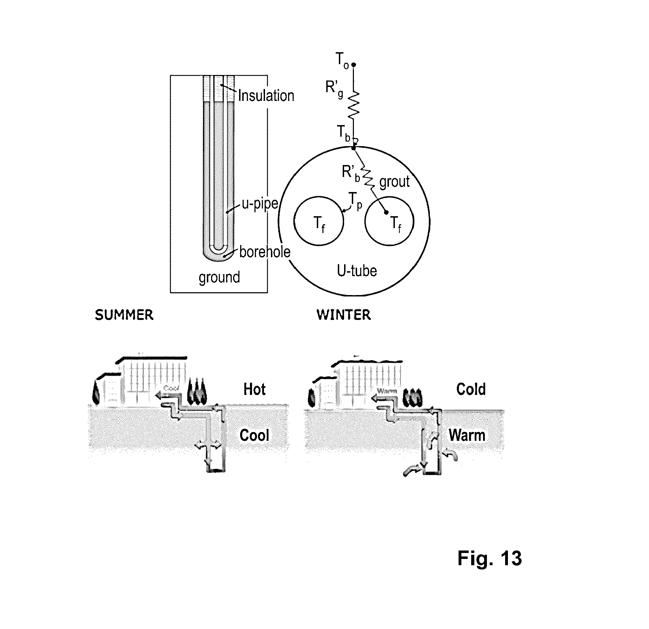

Fig. 13 is a schematic drawing of a typical energy system configuration of the present invention, utilising a single pipe vertical ground heat exchanger;

Fig. 14 is a schematic drawing showing the architecture of a distributed controller according to an embodiment of the present invention;

Fig. 15 is a schematic drawing showing the installation topology of a distributed controller according to an embodiment of the present invention;

Fig. 16 is a schematic drawing showing the connection of the components of a system according to an embodiment of the present invention;

Fig. 17 is a flow diagram showing the operation of a distributed controller according to an embodiment of the present invention;

Fig. 18 is a flow diagram showing the operation of a real time database simulator according to an embodiment of the present invention, with real time data affecting predictions shown in oval shapes;

Fig. 19 is a schematic drawing showing the disaggregation concept of a system according to an embodiment of the present invention, in which the dynamic simulation of the total resource assisted by the total real time consumption metering and device signatures allows the prediction of device level consumption;

Fig. 20 is a schematic drawing showing a stand alone performance module according to an embodiment of the present invention;

Fig. 21 is a schematic drawing showing an occupancy sensor for a single point of entrance, according to an embodiment of the present invention;

Fig. 22 is a schematic drawing showing a networked occupancy sensor for spaces with multiple points of entrance, according to an embodiment of the present invention;

Fig. 23 shows a circuit diagram for the connection of a PIR element and PSoC processor for use in the occupancy sensor of Figs. 21 or 22;

Fig. 24 is a graphical representation of the performance of the sensor of Figs. 21 or 22; and

Fig. 25 shows a circuit diagram for a direction detection sensor for use in the occupancy sensor of Figs. 21 or 22.

## DETAILED DESCRIPTION

Fig. 4 illustrates system of the present invention for simulation, control and performance monitoring of an energy system and the relevant sub-systems. Typically the system is for simulation, control and performance monitoring of an energy system integrated within a building and/or energy infrastructure, and comprises one or more of the following sub-systems:

a static simulator 40 for the creation of and optimal selection from a plurality of pre-defined energy system configurations,

a dynamic simulator 42 for predicting at predetermined intervals (for example on an hourly basis) the use and cost of a resource (for example electricity, oil, water, etc.) at a building or other facility (for example neighbourhood, outdoor area, etc.),

a distributed controller 41 for the intelligent and optimal planning of the energy production, storage and consumption within any energy system configuration, obtaining by any means (such as the web) (a) real-time data from a sensor network or (b) real-time or/and historical data from other distributed controllers which can provide useful data to optimize its control and efficiency performance,

a plurality of user interfaces 47,

a sensor network 44 comprising a plurality of sensors for (a) monitoring energy system parameters, building stock parameters, meteorological parameters, building occupancy, user actions etc. and (b) performing control actions on energy systems, appliances, building components etc.

a performance module 43 for monitoring the real-time performance of an energy system configuration or sub-system or/and a building in terms of energy efficiency, carbon emissions, indoor air quality, thermal comfort etc.

an integration module 46, and

a data storage module 45.

Other possible configurations of the system can be any combinations comprising two, three or four of the sub-systems 40, 41 or 48, 42, 43, and 44, described below.

The static simulator 40 may comprise a processor and static simulator software. The energy system configuration created and selected by the static simulator may be based on parameters selected by a user. The user can select the parameters through remote access, for example through the web using a mobile device or computer.

The static simulator 40 may have access to data relating to sub-system devices from a large database of manufacturer data both technical and financial. In such a case a static simulation provides all the details of the sub-systems and their components comprising the optimal configuration.

The dynamic simulator 42 may comprise a processor and dynamic simulator software. The dynamic simulator software may be embedded in any sub-system device such as a controller 41, a distributed controller 48, sensor network 44, external user interface 47, etc.

The external user interface 47 may comprise any type of web based interface or any type of cross platform web-based application or native application accessible from any device with internet access. Such devices are: mobile devices such as smartphones, tablets, portable PC etc. or desktop PC or other wearable devices such as watch, glass etc., from which a user will be able to monitor, operate and control an energy system or/and a sub-system or/and sub-system's component.

The integration module 46 may be a device incorporating open communication protocols enabling the communication and data exchange between any one of the present invention's sub-systems and third-party systems.

The data storage module 45 may collect data from any of the sub-systems and store them in the cloud. Data can also be stored in memory to any sub-system.

Output from the static simulator 40 may be used to set up the dynamic simulator 42 or/and the controller 41 or/and the distributed controller 48 or/and the performance module 43 or/and sensor network 44.

Each sub-system 40, 41, 42, 43, 44, 48 shall be able to operate and deployed either as stand-alone system or in combination with any number of sub-systems, incorporating fully functional and deployable systems fulfilling any user requirement and need arising from all the possible configurations generated from static simulator 40 suitable for any type of infrastructure.

The static simulator is a software for simulation and modeling, and includes models for energy production, storage and use units as well as utility grid exchanges that will provide decision aid when designing or retrofitting energy infrastructures at the building domain or land in terms of the energy systems to be used.

The static simulator is a modeling tool that includes the following components:

- database of pre-set energy systems configurations
- resource input data: such as location data, building data, energy sources data, energy prices and tariffs data, historical energy consumptions of energy systems data, historical meteorological data, energy systems and sub-system manufacturer data, historical energy systems and sub-system production data, financial and energy use data which is based on the dis-aggregation of the total predicted figure to the device level.
- parameterized rule-based decision making algorithm for hourly energy dispatch and allocation
- multi-criteria decision making algorithm for optimal selection and ranking of alternative energy systems configurations

Data are collected from users, manufacturers of energy-systems and energy sub-systems, databases etc. through either a user interface or any other method.

The static simulator work in two different operation modes both according to the end-use energy loads and the users wish configurations:

1. automatic, whereby the resource input data are entered and the static simulator provides for an optimum energy systems configuration,
2. manual, whereby the user defines the preferred energy systems configurations and the static simulator estimates the optimal configuration

In both cases the optimisation is based on a parameterized rule-based algorithm for hourly energy dispatch and allocation as well as user driven multi-criteria decision making algorithm for optimal selection and ranking of alternative energy systems configurations.

The static simulator distinguish itself from the State of Art (SoA) RET simulators by offering a tool that selects and size optimal RET configuration with following advanced and combined features:

• Integrated approach for both electrical and thermal domain

- Grid-connected hybrid system architectures
- Multi-criteria decision making algorithm for RET configuration selection
- Driven by various, real, vendor data
- Short execution times, also applicable for deployment on various platforms

The static simulator allows wide range of inputs and outputs as listed in the following Tables 1 and 2 below:

## Table 1: Static Simulator Inputs

| Type of variable | Name of variable | Input method |
|---|---|---|
| **Meteorological potential of the location (*hourly basis or less*)** | | |
| Solar resource data | | |
| | Global Solar Irradiation | |
| | Beam Solar Irradiation | |
| | Diffuse Solar Irradiation | |
| | Ground reflectance | Manually inserted or retrieved from DB |
| Wind resource data | | |
| | Wind speed | |
| | Wind direction | |
| Air temperature | | |
| | Ambient temperature | |

| Building type and space availability | | |
|---|---|---|
| Available area for RET deployment | | |
| | Roof area | |
| | Surrounding area | Manually inserted |
| | Wall facades area | |
| | Basement area | |
| Type of construction and surrounding soil | | |
| | Soil type | Selected from dropdown list |
| | Windows to floor area ratio | |
| | Heat transfer coefficient (wall) | |
| | Heat transfer coefficient (foundation wall) | Manually inserted |
| | Heat transfer coefficient (ceiling) | |
| | Heat transfer coefficient (windows) | |
| | Heat transfer coefficient (basement floor) | |
| **Energy consumption and pricing** | | |
| Electricity use profile | | |
| | List of devices | |
| | Electricity use profiles | |
| | Electricity bills | |
| Hot water use profile | | |
| | Quantity profile | |
| | Temperature profile | |
| Space comfort profile | | |
| | Total indoor area | Manually inserted |
| | Building conditioned area | |
| | Number of floors | |
| | Number of occupants | |
| | Space temperature profile | |
| Energy pricing scheme | | |
| | Price varies across energy zones (quantity) | |
| | Price varies across tariff period (time of use) | |
| **Technical characteristics of RETs** | | |
| RETs' vendors | | |
| | Data sheet information for each RET | Retrieved from DB (manual or automatic selection) |
| RET installation parameters | | |
| | Height | |
| | Azimuth | Manually inserted |
| | Elevation | |
| **Hybrid energy system configuration and size** | | |
| | Set of RETs and their sizes | • Manual - From pre-set hybrid RET configurations<br>• Semi automatic – Filling targeted questionnaire<br>• Automatic – Decided by advance static simulator algorithms |
| **Energy management strategies** | | Selected from dropdown list |
| Maximization of Financial Benefit (FB) | | |
| | Storage SOC threshold (low) | |
| | Storage SOC threshold (high) | |
| | Storage SOC minimum | |
| | Storage SOC initial state | |
| Peak shaving & FB | | Manually inserted |
| | Peak period start | |
| | Peak period start | |
| | Peak period penalty | |
| Limited battery cycles & FB | | |
| | Max. number of battery cycles | |
| Filling grid outages & FB | | |

| | Black-out start | |
| | Black-out end | |
| **Project financing conditions** | | |
| | Maximum budget/Loan | |
| | Governmental incentives | |
| | Cost of capital | Manually inserted |
| | Inflation | |
| | Risk | |
| | Increase of energy prices | |
| **Relative criteria values for optimal RET configuration decision making algorithm** | | |
| Financial criteria | | |
| | Total Investment Cost | |
| | Net present value (NPV) | |
| | Internal rate of return (IRR) | |
| | Return on investments (ROI) | |
| Environmental criteria | | Chosen from slider |
| | GHG emissions ($CO_2$/$CH_4$/$N_2O$) footprint | |
| | Non-renewable energy consumed ratio | |
| Hybrid system performance | | |
| | Wasted renewable energy | |
| | Loss of power supply | |

## Table 2: Static Simulator Outputs

| Type of variable | Name of variable | Visualisation method |
|---|---|---|
| **System components selection and sizing** | | |
| | Vendor/Manufacturer | |
| | Rated power/capacity | Table |
| | Number of units | |
| **System performance - Energy Production (*hourly basis or less*)** | | |
| | Total Collected Energy | |
| | Photovoltaic Array Vs. Meteo | |
| | Wind Turbine Vs. Meteo | Table and plots |
| | Geothermal Heat Pump Vs. Meteo | |
| | Solar Thermal Collector Vs. Meteo | |
| **System performance - Energy Consumption (*hourly basis or less*)** | | |
| | Total Energy Demand | |
| | Electricity Demand | |
| | Heating Demand | Table, charts and plots |
| | Cooling Demand | |
| | Hot Water Demand | |
| **System performance - Energy Storage & Energy Conservation (*hourly basis or less*)** | | |
| | Battery SOC | |
| | Water Tank Temperature | Plots |
| | Wasted Renewable energy | |
| | Lack of Energy Supply | |
| **System performance - Energy Trading (*hourly basis or less*)** | | |
| | Energy Sold to Grid | |
| | Money Earned from selling | |
| | Energy Purchased from Grid | Table, charts and plots |
| | Money Spent for buying | |
| | Overall Cash Balance | |
| **System performance - Energy management (*hourly basis or* | | |

| *less*) | | |
|---|---|---|
| | Renewable Energy Dispatch (stacked: Locally Used, Stored, Exported) | Charts and plots |
| | Dynamic Energy Sourcing (staked: RETs | |
| **System performance - Environmental impact (***hourly basis or less***)** | | |
| | GHG emissions | Table, charts and plots |
| | Renewable to conventional consumed energy ratio | |
| **Financial evaluation** | | |
| | Total Investment Cost | Table |
| | Net present value (NPV) | Table and plot |
| | Internal rate of return (IRR) | Table |
| | Discounted payback period (DPP) | |

The static simulator software may be operated through a plurality of user interfaces or embedded in a controller or sensor as part of a sensor network.

Fig. 2 and Fig. 3 are examples of energy system configurations. Below is an indicative list of other possible energy system configurations:

Solar energy for electricity:

- photovoltaic panels for electric loads
- photovoltaic panels for network supply
- photovoltaic panels for local loads and network supply
- photovoltaic panels for local loads (with storage) and network supply (Fig.3)
- PV-hydrogen for electricity
- PV-hydrogen for electricity and network supply

wind energy for electricity:

- wind turbine for local loads
- wind turbine for network supply
- wind turbine for local loads and network supply
- wind turbine for local loads (with storage) and network supply
- wind-hydrogen for electricity
- wind- hydrogen for electricity and network supply

hybrid systems for electricity

- photovoltaic panels and wind turbine for local electric loads
- photovoltaic panels and wind turbine for network supply
- photovoltaic panels and wind turbine for local loads and network supply
- photovoltaic panels and wind turbine (with storage) for local loads and network supply
- photovoltaic panels-wind turbine-hydrogen for electricity
- photovoltaic panels-wind turbine-hydrogen for electricity and network supply solar energy for heating
- thermal solar collectors for heating up use water
- thermal solar collectors for jointly heating up use water and space
- separate boilers for heating use water and space
- phase changing materials(energy store) for jointly heating up use water and space

geothermal systems for heating:

- geothermal heat pumps for heating/cooling space

hybrid systems for heating:

- solar collectors for hot water and geothermal heat pumps for space heating phase changing materials:
- phase changing materials for heating and cooling space

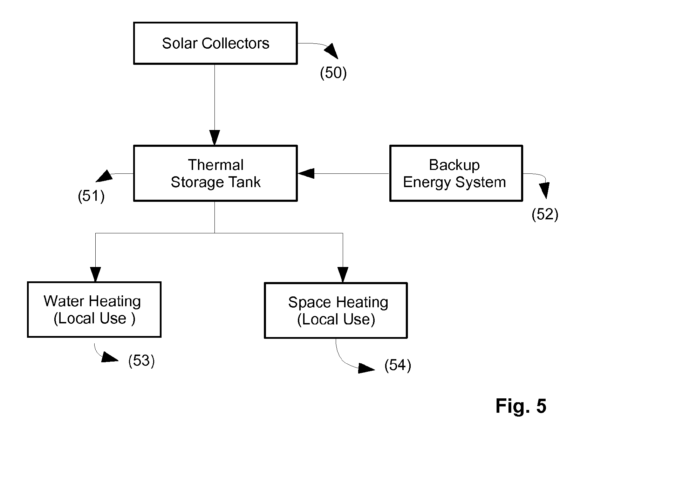

A description of a simulation model hereinafter called solar-thermal model which produces energy and financial data for the sample configuration illustrated in Fig. 5 is presented below:

The solar-thermal model takes into account (a) the meteorological data (hourly data or less) of the location that the system will be installed (b) the temperature profile of the examined space and the hot water consumption profiles as given by the end-user, the profiles can be hourly or less, (c) values for the collector and hot water storage tank taken from a lab test report according to the standards EN 12975-2, ISO 9806-1 and EN 12976-2 and (d) transmission heat losses of the examined building in W/K.

The solar-thermal model approaches the dynamic phenomenon of solar heating systems: the use of 1 litre of hot water requires the addition of a corresponding quantity of cold water in the tank, thus altering the energy balance of the system continuously. The solar-thermal model calculates the hot water storage tank temperatures (hourly or less) and thus the thermal energy outputs of the system necessary to produce the financial results.

The solar-thermal model produces the sizing of the solar heating system and combi-system based on the actual needs of the end user for hot water and space heating. The model can be applied at any point of the world using a database of meteorological and cold water data (hourly data or less). The solar-thermal model calculates a number of parameters with much higher accuracy than any existing simulator. Comparisons of actual energy bills and consumptions for space heating and hot water with the results obtained from the solar-thermal simulation, showed an accuracy higher than 95%.

The high accuracy of the model is based on the following:

- Stratification of the storage tank volume in at least 100 layers
- Calculation of maximum available tank temperature every hour or less
- Calculation of the mean available tank temperature every hour or less
- Calculation of the available quantity of water at desired temperature that produced by solar
- Calculation of the energy consumption (either solar or backup) for at least every 1/100 of the storage tank volume

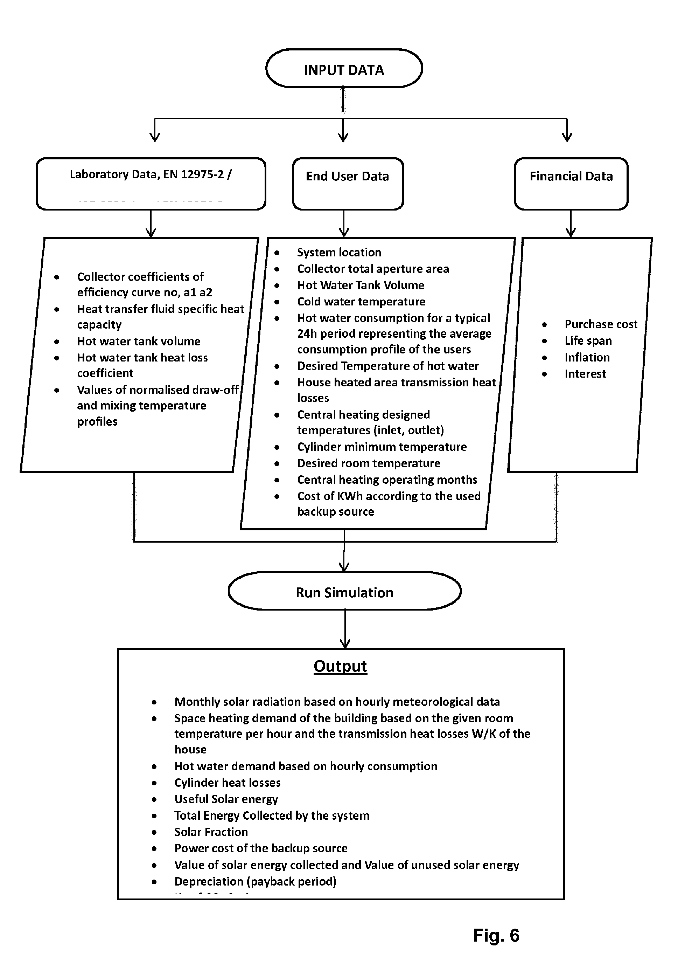

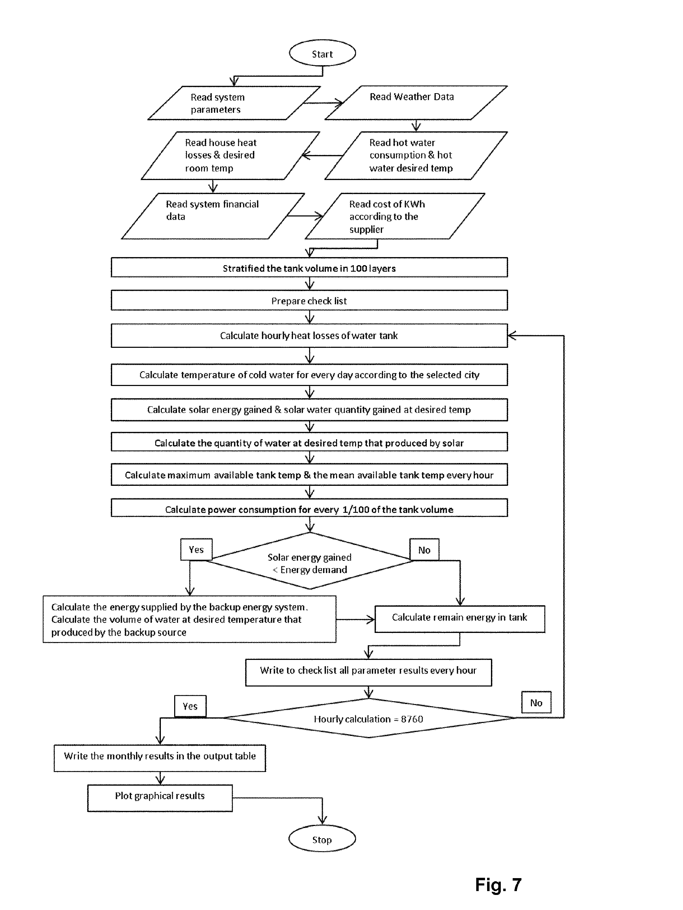

The input data and the output results of the simulation model are summarized in Fig. 6. In Fig. 7 the solar-thermal model simulation algorithm is illustrated step by step. Each step is explained in detail below:

- Read system parameters for collector and storage tank data from lab test reports, EN 12975-2 / ISO 9806-1 and EN 12976-2 (Collector aperture area, Coefficients of efficiency curve no, a1 a2, incidence angle modifier, Heat transfer fluid specific heat capacity, Hot Water Tank Volume, Hot water tank heat loss coefficient, Values of normalised draw-off and mixing temperature profiles)
- Read Weather Data from 1 to 8760 (hourly solar radiation, hourly ambient temperature)
- Read water drawn off profile (hot water consumption for a typical 24h period representing the average consumption profile of the users) and desired temperature of hot water
- Read central heating room temperature & operating months
- Read financial data for solar system (Purchase cost, Life span, Inflation, Interest)
- Read cost of KWh according to the supplier
- Stratified the tank volume in 100 layers (in contrast to the accredited laboratories that create normalised draw-off and mixing temperature profiles f(V) and g(V) for 10 layers)
- Prepare check list
- Calculate hourly Heat losses of water tank
- Calculate temperature of cold water for every day according to the selected city
- Calculate solar energy gained by the system
- Calculate the quantity of water at desired temperature that produced by solar
- Calculate maximum available temperature of tank every hour
- Calculate mean available temperature of tank every hour
- If solar energy gained is lower than the energy demand (taking into account the desired hot water temperature) then start backup source.
- Calculate power consumption for every 1/100 of the tank volume
- Calculate the energy supplied by the backup source
- Calculate the volume of water at desired temperature that produced by the backup source
- Calculate remain solar energy in tank for the next morning

- Calculate remain backup energy in tank for the next morning
- Write to check list all parameter results (8760 rows x 25 columns=219000 values)
- Write the monthly results in the output table (Monthly solar radiation based on hourly meteorological data, Space heating demand of the building based on the given room temperature per hour and the transmission heat losses W/K of the house, Hot water demand based on hourly consumption, Cylinder heat losses, Useful Solar energy, Total Energy Collected by the system, Solar Fraction, Power cost of the backup source, Value of solar energy collected and Value of unused solar energy, Depreciation, Kg of CO2 Savings)
- Plot graphical results

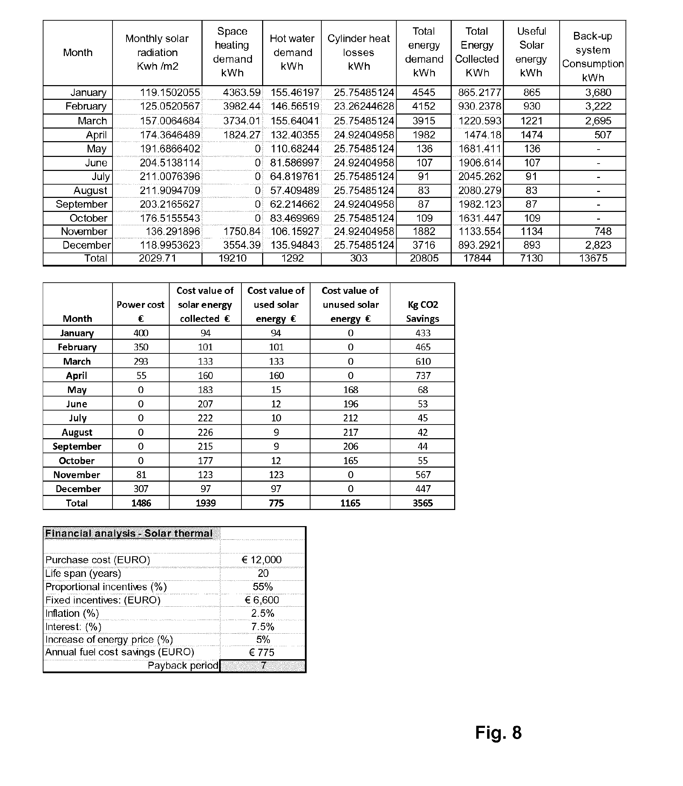

Fig. 8 shows output results for a space heating system located in Nicosia, Cyprus with 150 litre daily consumption of hot water and 20.2 degrees Celsius mean room temperature.

Table 3 shows example output results in the form of a report of the solar-thermal simulation for a space heating system operated according to the present invention in Nicosia, Cyprus.

Table 3: solar-thermal simulation report

| Location of the system |
| --- |
| Cyprus, Nicosia, Longitude: 33.35°, Latitude: 35.17° |
| **System overview (annual values))** |
| Annual solar radiation: 2030 Kwh /m$^2$ |
| Space heating demand: 19210 kWh |
| Hot water demand: 1292 kWh |
| Cylinder heat losses: 303 kWh |
| Total energy demand: 20805 kWh |
| Total energy collected: 17844 KWh |
| Useful solar energy: 7130 kWh |
| Back-up energy needed: 13675 kWh |
| Solar fraction: 34 % |
| Power cost from back-up system: €1486 |
| Cost value of total solar energy: €1939 |
| Cost value of used solar energy: €775 |
| Cost value of unused solar energy: €1165 |
| Max. Reduction in $CO_2$ emissions ($CO_2$ Savings): 3565 kg |
| **Meteorological data-Overview** |
| Average outdoor temperature 19.3 °C |
| Global irradiation, annual sum 2030 kWh/m$^2$ |
| **Building** |
| Heated living area: 200 m$^2$ |
| Heating energy demand excluding: 19210 kWh |
| Area: Wall 280 m$^2$, Roof 120 m$^2$, Floor 150 m$^2$, Windows 75 m$^2$ |
| U values: Wall 0.7, Roof 0.5, Floor 1.7, Windows 2.5 [W/m$^2$K] |
| Total specific transmission heat losses: 700W/K |
| Central Heating Room Temperature per hour |

| Hour | Central heating Room Temperature | Hour | Central heating Room Temperature |
| --- | --- | --- | --- |
| 01:00 | 19.5 | 13:00 | 19.5 |
| 02:00 | 19.5 | 14:00 | 19.5 |

| | | | |
|---|---|---|---|
| 03:00 | 19.5 | 15:00 | 19.5 |
| 04:00 | 19.5 | 16:00 | 19.5 |
| 05:00 | 19.5 | 17:00 | 21 |
| 06:00 | 21 | 18:00 | 21 |
| 07:00 | 21 | 19:00 | 21 |
| 08:00 | 21 | 20:00 | 21 |
| 09:00 | 20 | 21:00 | 21 |
| 10:00 | 19.5 | 22:00 | 21 |
| 11:00 | 19.5 | 23:00 | 21 |
| 12:00 | 19.5 | 00:00 | 19.5 |

## Hot water demand

Volume withdrawal/daily consumption: 150 l/d
Temperature setting: 40 °C
Energy demand: 1292 kWh

| Hour | User Demand: withdrawal/daily consumption | Hour | User Demand: withdrawal/daily consumption |
|---|---|---|---|
| 01:00 | 0 | 13:00 | 0 |
| 02:00 | 0 | 14:00 | 0 |
| 03:00 | 0 | 15:00 | 0 |
| 04:00 | 0 | 16:00 | 0 |
| 05:00 | 0 | 17:00 | 0 |
| 06:00 | 10 | 18:00 | 20 |
| 07:00 | 10 | 19:00 | 70 |
| 08:00 | 0 | 20:00 | 40 |
| 09:00 | 0 | 21:00 | 0 |
| 10:00 | 0 | 22:00 | 0 |
| 11:00 | 0 | 23:00 | 0 |
| 12:00 | 0 | 00:00 | 0 |

## Financial analysis

Purchase costs: €12000
Life span: 20 years
Proportional incentives: 55%
Fixed incentives: €6600
Inflation: 2.5 %
Interest: 7.5 %
Increase of energy prices: 5 %
   *Electricity: 0.28 €/kWh*
   *Heating oil: 0.1245 €/Kwh*
   *LPG: 0.10869 €/Kwh*
Annual fuel cost savings: €775 (LPG: 0.10869 €/Kwh * 7130 Kwh)
Payback period: 7 years

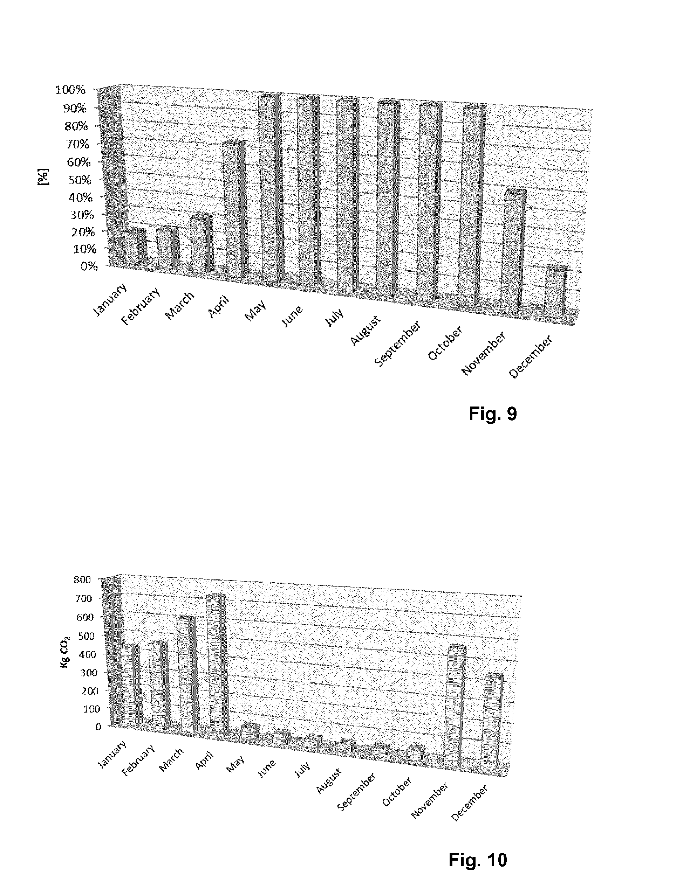

Figs. 9, 10, 11 and 12 show various monthly graphical results of the solar-thermal simulation for space heating and domestic hot water.

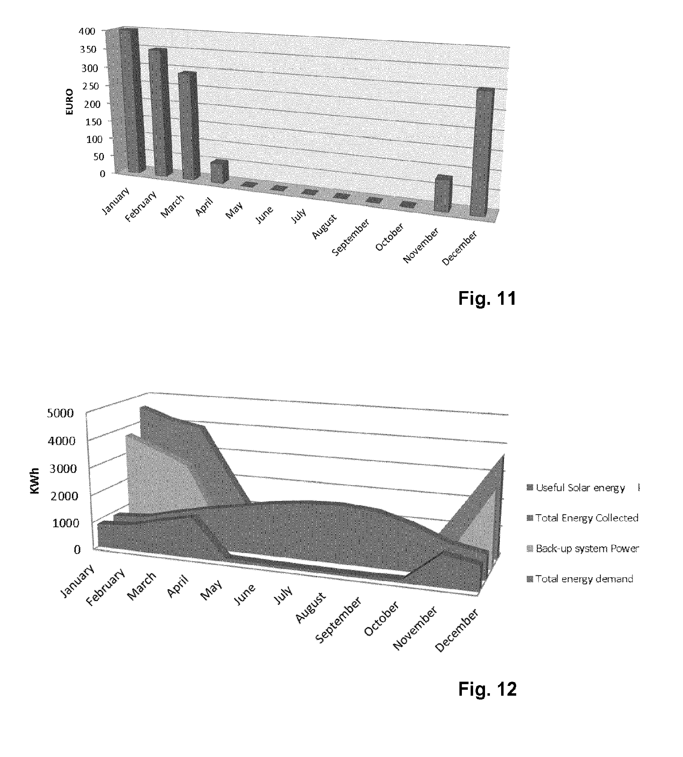

More specifically Fig. 9 shows the monthly solar fraction in %, Fig. 10 shows the Carbon Dioxide ($CO_2$) savings obtainable by a combination solar heating system with 1000Lt tank and 16m² flat plate blue selective collectors, installed in Nicosia, Cyprus, Fig. 11 shows the power cost per month, according to the energy consumption of the system and the back-up source, and Fig. 12 shows the Solar Water Heating Energy Results (Total Energy Collected, Total Energy demand, Back-up system Power and Useful Solar Energy).

A description of a simulation model hereinafter called geothermal model which produces energy and financial data for geothermal systems, is presented below.

The geothermal model calculates the accurate outlet temperature $T_{m,o}$ in a vertical ground loop taking into consideration the parameters of fluid circulation below the ground (fluid velocity, dynamic viscosity, friction, steady/unsteady flow, heat transfer coefficients), the different types of soil and the related thermal conductivities, the different types of piping systems (pipe geometry, materials and their thermal resistances and conductivities) and also climate and environment conditions that affect the mean annual surface soil temperature and the annual surface temperature amplitude. The Outlet Temperature $T_{m,o}$ of the heat transfer fluid below the ground is the fluid temperature that represents the ground source heat pump (GSHP) evaporator fluid inlet in case of heating and GSHP condenser fluid inlet in case of cooling.

The geothermal model combines fluid analysis equations, exponential functions and special flow numbers (Reynold, Nusselt, Prandtl) in such a way in order to increase the accuracy level. The geothermal model predicts with high accuracy the outlet temperature for vertical ground loops having different depths and geometries in any place on earth for 365 days per year.

The calculated outlet temperature $T_{m,o}$ is then used in order to select the appropriate correction factors at the evaporator and condenser with regards to their cooling/heating capacity and their input power and thus the accurate heating and cooling efficiency ratios (COP and E.E.R. respectively) for each examined GSHP.

The ability of estimating the accurate COP and E.E.R. for each examined GSHP and the particular soil type and ground loop geometry, enables the selection of the most appropriate GSHP type to satisfy the building space energy demands.

The Outlet Temperature $T_{m,o}$ is calculated using the equation 1:

$$T_{m,o} = T_g - \left(T_g - T_{m,i}\right)\exp\left(-\frac{PLU}{\dot{m}C_p}\right) \qquad (eq1)$$

where

- $T_g$ (K): Ground temperature (see equations 2,3)
- $T_{m,i}$ (K): Input Temperature
- $\dot{m}$ (kg/s): Mass Flow
- P (m): Pipe Perimeter
- L (m): Length of the step in the pipe
- $C_p$ (J/kg.K): Specific Heat
- U (W/m²K): Heat Transfer Coefficient (see equations 4-10)

The ground temperatures $T_g$ (equation 2) are calculated as a function of the Ground Heat Exchangers depth, the soil thermal diffusivity and the mean annual surface soil temperature $\overline{T_g}$, the annual surface temperature amplitude $A_s$ (max air temp minus min air temp)/2) and the phase constant days (day of the year of the minimum surface temperature). The ground temperatures differ from country to country since the parameters $\overline{T_g}$, $A_s$, to are depending from the country's climate and environment.

$$T_g\left(X_s,t\right) = \overline{T_g} - A_s\exp\left(-X_s\sqrt{\frac{\pi}{365\alpha}}\right)\cos\left[\frac{2\pi}{365}\left[t - t_0 - \frac{X_s}{2}\sqrt{\frac{365}{\pi\alpha}}\right]\right] \qquad (eq2)$$

where

- $X_s$ (m): the soil depth
- t (days): the day of the year
- $\overline{T_g}$ (°C): the mean annual surface soil temperature
- As (°C): the annual surface temperature amplitude ($T_{max}$-$T_{min}$)
- a (m²/s): soil thermal diffusivity
- to (days): phase constant

The thermal diffusivity is given by equation 3:

$$a = \frac{k}{\rho c_p} \qquad \text{(eq3))}$$

where

- k (W/m K): the thermal conductivity
- $\rho$ (kg/m$^3$): density
- C$_p$(J/kg K): the specific heat

Below the needed equations for the calculation of the Heat Transfer Coefficient U are presented.

$$\text{Reynolds Number, } Re_D = \frac{\rho u_m D}{\mu} \qquad \text{(eq4)}$$

where:

- $\rho$ (kg/m3) : water density
- $\mu$ (Pa s): Dynamic Viscosity
- u$_m$ (m/s): mean fluid velocity
- D (m) : Pipe Diameter

$$\text{Nusselt Number, } Nu_D = \frac{(f/8)(Re_D - 1000)Pr}{1 + 12.7(f/8)^{1/2}(Pr^{2/3} - 1)} \qquad \text{(eq5)}$$

$$\text{Friction Factor, } f = (0.790 \ln Re_D - 1.64)^{-2} \qquad \text{(eq6)}$$

$$\text{Prandtl number, } Pr = \frac{v}{a} = \frac{c_p \mu}{k} \qquad \text{(eq7)}$$

where:

- $v$ (m$^2$/s) : kinematic viscosity
- $\alpha$ (m$^2$/s): thermal diffusivity
- $\mu$ (Pa s): dynamic viscosity
- k (W/(m K): thermal conductivity,
- c$_p$ (J/(kg K): specific heat

$$\text{Convection Coefficient, } h = \frac{Nu_D k}{D} \qquad \text{(eq8)}$$

where:

- k (W/m.K)= thermal conductivity of liquid
- D (m)= Pipe Diameter

Absolute thermal resistance, Rth (ground, crout, pipe, liquid),

$$R_{th} = \frac{\ln(r_2 / r_1)}{2\pi L k} \qquad (eq9)$$

where:

- $r_2$ (m): external radius of pipe
- $r_1$ (m): internal radius of pipe
- L (m): length range of pipe
- k [W/m.K]: the thermal conductivity of the examined layer

$$\text{Heat Transfer Coefficient, } U = \frac{1}{R_{tot} A_{in}} \qquad (eq10)$$

where:

$A_{in}$ (m$^2$): Area normal to the direction of heat transfer
Rtot (K/W) :Total Thermal Resistance of ground, crout, pipe and liquid

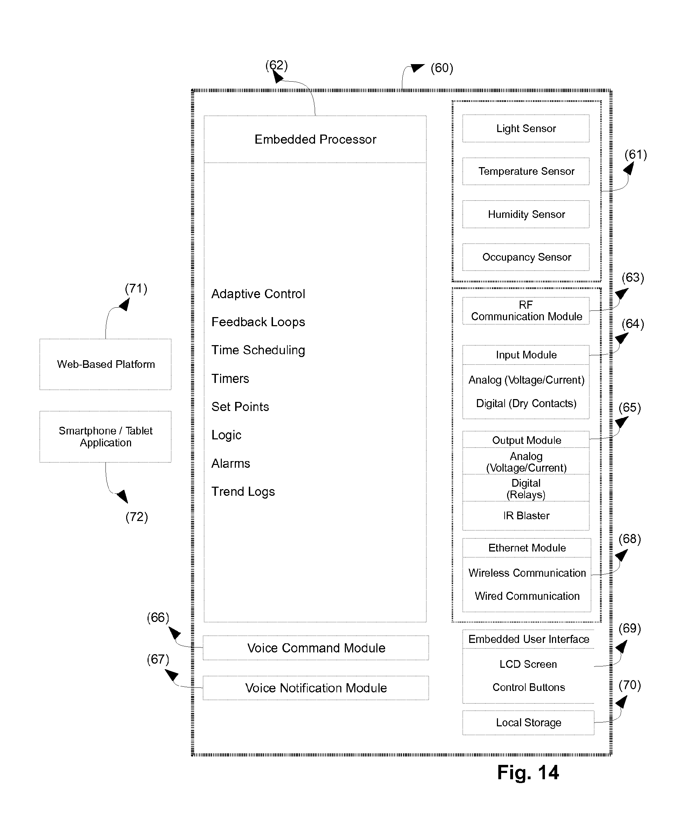

Two typical cases in Cyprus and UK with 6 different soil types are examined and presented. The Ground Heat Exchangers depth in both examined cases is 100 m and the calculations are done for a single pipe, as it is shown in Figure 14.

Tables 4, 6, 8 and 10 show the summarized output results for two typical cases in Cyprus and UK with 6 different soil types during a typical winter and a typical summer day.

Tables 5, 7, 9 and 11 show the analytical output results for two typical cases in Cyprus and UK (typical heating and cooling days) with 3 different soil types (Sandstone, Dense rock, Dry Heavy soil) until 30m depth.

Table 4: Summarized output results during a typical winter day in Cyprus

| Summary Results | Thermal diffusivity (m$^2$/day) | K_ground (W/mK) | R_ground (K/W) | R_total | U (W/m$^2$K) | Tin (°C) | Tout (°C) |
|---|---|---|---|---|---|---|---|
| Rock type, Sandstone | 0.075 | 2.4 | 0.053776480 | 0.445 | 26.107605 | 7.00 | 10.67 |
| Rock type, Dense rock | 0.111 | 3.46 | 0.037301605 | 0.428 | 27.111391 | 7.00 | 10.79 |
| Rock type, Heavy soil, Dry | 0.045 | 0.87 | 0.148348911 | 0.540 | 21.531410 | 7.00 | 10.12 |
| Soil type, Coarse 100% sand 1900 Kg/m$^3$, 5%moist | 0.094 | 2.8 | 0.046094126 | 0.437 | 26.566266 | 7.00 | 10.73 |
| Soil type, Fine Grain 100% clay 1900 Kg/m$^3$ 5%moist | 0.038 | 1.2 | 0.107552960 | 0.499 | 23.292608 | 7.00 | 10.34 |
| Limestone | 0.1019 | 2.54 | 0.050812422 | 0.442 | 26.282680 | 7.00 | 10.70 |

Table 5: Analytical results for 3 soil types (Sandstone, Dense rock, Dry Heavy soil) until 30m depth, Cyprus heating

| Rock type, Sandstone : 0.075 m^2/day | | | | | |
|---|---|---|---|---|---|
| Depth | Tground | Tin (K) | Tout (K) | Tin (ºC) | Tout (ºC) |
| 0 | 277.97185 | 280.00 | | 7.00 | |
| 1 | 286.13392 | 280.00 | 280.00 | 7.00 | 7.00 |
| 2 | 291.15695 | 280.01 | 280.01 | 7.01 | 7.01 |
| 3 | 293.76411 | 280.03 | 280.03 | 7.03 | 7.03 |
| 4 | 294.71786 | 280.06 | 280.06 | 7.06 | 7.06 |
| 5 | 294.67588 | 280.08 | 280.08 | 7.08 | 7.08 |
| 6 | 294.13506 | 280.11 | 280.11 | 7.11 | 7.11 |
| 7 | 293.42937 | 280.14 | 280.14 | 7.14 | 7.14 |
| 8 | 292.75537 | 280.16 | 280.16 | 7.16 | 7.16 |
| 9 | 292.20772 | 280.19 | 280.19 | 7.19 | 7.19 |
| 10 | 291.81381 | 280.21 | 280.21 | 7.21 | 7.21 |
| 11 | 291.56243 | 280.23 | 280.23 | 7.23 | 7.23 |
| 12 | 291.42455 | 280.26 | 280.26 | 7.26 | 7.26 |
| 13 | 289.000 | 280.28 | 280.28 | 7.28 | 7.28 |
| 14 | 291.359 | 280.29 | 280.29 | 7.29 | 7.29 |
| 15 | 291.379 | 280.32 | 280.32 | 7.32 | 7.32 |
| 16 | 291.408 | 280.34 | 280.34 | 7.34 | 7.34 |
| 17 | 291.438 | 280.36 | 280.36 | 7.36 | 7.36 |
| 18 | 291.464 | 280.38 | 280.38 | 7.38 | 7.38 |
| 19 | 291.482 | 280.40 | 280.40 | 7.40 | 7.40 |
| 20 | 291.495 | 280.42 | 280.42 | 7.42 | 7.42 |
| 21 | 291.502 | 280.44 | 280.44 | 7.44 | 7.44 |
| 22 | 291.505 | 280.46 | 280.46 | 7.46 | 7.46 |
| 23 | 291.506 | 280.49 | 280.49 | 7.49 | 7.49 |
| 24 | 291.506 | 280.51 | 280.51 | 7.51 | 7.51 |
| 25 | 291.504 | 280.53 | 280.53 | 7.53 | 7.53 |
| 26 | 291.503 | 280.55 | 280.55 | 7.55 | 7.55 |
| 27 | 291.502 | 280.57 | 280.57 | 7.57 | 7.57 |
| 28 | 291.501 | 280.59 | 280.59 | 7.59 | 7.59 |
| 29 | 291.500 | 280.61 | 280.61 | 7.61 | 7.61 |
| 30 | 291.500 | 280.63 | 280.63 | 7.63 | 7.63 |

| Rock type, Dense rock : 0.111 m^2/day | | | | | |
|---|---|---|---|---|---|
| Depth | Tground | Tin (K) | Tout (K) | Tin (ºC) | Tout (ºC) |
| 0 | 277.97185 | 280.00 | | 7.00 | |
| 1 | 284.9286 | 280.00 | 280.00 | 7.00 | 7.00 |
| 2 | 289.68602 | 280.01 | 280.01 | 7.01 | 7.01 |
| 3 | 292.62482 | 280.03 | 280.03 | 7.03 | 7.03 |
| 4 | 294.17661 | 280.05 | 280.05 | 7.05 | 7.05 |
| 5 | 294.75153 | 280.08 | 280.08 | 7.08 | 7.08 |
| 6 | 294.69923 | 280.11 | 280.11 | 7.11 | 7.11 |
| 7 | 294.29371 | 280.14 | 280.14 | 7.14 | 7.14 |
| 8 | 293.7334 | 280.17 | 280.17 | 7.17 | 7.17 |
| 9 | 293.15018 | 280.19 | 280.19 | 7.19 | 7.19 |
| 10 | 292.62229 | 280.22 | 280.22 | 7.22 | 7.22 |
| 11 | 292.18809 | 280.24 | 280.24 | 7.24 | 7.24 |
| 12 | 291.85852 | 280.27 | 280.27 | 7.27 | 7.27 |
| 13 | 291.628 | 280.29 | 280.29 | 7.29 | 7.29 |
| 14 | 291.480 | 280.31 | 280.31 | 7.31 | 7.31 |
| 15 | 291.398 | 280.34 | 280.34 | 7.34 | 7.34 |
| 16 | 291.363 | 280.36 | 280.36 | 7.36 | 7.36 |
| 17 | 291.359 | 280.38 | 280.38 | 7.38 | 7.38 |
| 18 | 291.373 | 280.40 | 280.40 | 7.40 | 7.40 |
| 19 | 291.396 | 280.42 | 280.42 | 7.42 | 7.42 |
| 20 | 291.422 | 280.45 | 280.45 | 7.45 | 7.45 |
| 21 | 291.445 | 280.47 | 280.47 | 7.47 | 7.47 |
| 22 | 291.465 | 280.49 | 280.49 | 7.49 | 7.49 |
| 23 | 291.494 | 280.51 | 280.51 | 7.51 | 7.51 |
| 24 | 291.501 | 280.53 | 280.53 | 7.53 | 7.53 |
| 25 | 291.505 | 280.55 | 280.55 | 7.55 | 7.55 |
| 26 | 291.506 | 280.58 | 280.58 | 7.58 | 7.58 |
| 27 | 291.506 | 280.60 | 280.60 | 7.60 | 7.60 |
| 28 | 291.505 | 280.62 | 280.62 | 7.62 | 7.62 |
| 29 | 291.504 | 280.64 | 280.64 | 7.64 | 7.64 |
| 30 | 291.503 | 280.66 | 280.66 | 7.66 | 7.66 |

| Rock type, Heavy soil, Dry : 0.045 m^2/day | | | | | |
|---|---|---|---|---|---|
| Depth | Tground | Tin (K) | Tout (K) | Tin (ºC) | Tout (ºC) |
| 0 | 277.97185 | 280.00 | | 7.00 | |
| 1 | 287.89026 | 280.00 | 280.00 | 7.00 | 7.00 |
| 2 | 292.91795 | 280.01 | 280.01 | 7.01 | 7.01 |
| 3 | 294.66415 | 280.03 | 280.03 | 7.03 | 7.03 |
| 4 | 294.61061 | 280.05 | 280.05 | 7.05 | 7.05 |
| 5 | 293.81981 | 280.08 | 280.08 | 7.08 | 7.08 |
| 6 | 292.91695 | 280.10 | 280.10 | 7.10 | 7.10 |
| 7 | 292.1904 | 280.12 | 280.12 | 7.12 | 7.12 |
| 8 | 291.71688 | 280.14 | 280.14 | 7.14 | 7.14 |
| 9 | 291.46584 | 280.16 | 280.16 | 7.16 | 7.16 |
| 10 | 291.3696 | 280.17 | 280.17 | 7.17 | 7.17 |
| 11 | 291.36168 | 280.19 | 280.19 | 7.19 | 7.19 |
| 12 | 291.39255 | 280.21 | 280.21 | 7.21 | 7.21 |
| 13 | 291.432 | 280.23 | 280.23 | 7.23 | 7.23 |
| 14 | 291.465 | 280.24 | 280.24 | 7.24 | 7.24 |
| 15 | 291.488 | 280.26 | 280.26 | 7.26 | 7.26 |
| 16 | 291.500 | 280.28 | 280.28 | 7.28 | 7.28 |
| 17 | 291.505 | 280.30 | 280.30 | 7.30 | 7.30 |
| 18 | 291.506 | 280.32 | 280.32 | 7.32 | 7.32 |
| 19 | 291.505 | 280.33 | 280.33 | 7.33 | 7.33 |
| 20 | 291.503 | 280.35 | 280.35 | 7.35 | 7.35 |
| 21 | 291.502 | 280.37 | 280.37 | 7.37 | 7.37 |
| 22 | 291.501 | 280.39 | 280.39 | 7.39 | 7.39 |
| 23 | 291.500 | 280.40 | 280.40 | 7.40 | 7.40 |
| 24 | 291.500 | 280.42 | 280.42 | 7.42 | 7.42 |
| 25 | 291.500 | 280.44 | 280.44 | 7.44 | 7.44 |
| 26 | 291.500 | 280.46 | 280.46 | 7.46 | 7.46 |
| 27 | 291.500 | 280.47 | 280.47 | 7.47 | 7.47 |
| 28 | 291.500 | 280.49 | 280.49 | 7.49 | 7.49 |
| 29 | 291.500 | 280.51 | 280.51 | 7.51 | 7.51 |
| 30 | 291.500 | 280.53 | 280.53 | 7.53 | 7.53 |

Table 6: Summarized output results during a typical summer day in Cyprus

| Summary Results | Thermal diffusivity (m$^2$/day) | K_ground (W/mK) | R_ground (K/W) | R-total | U (W/m$^2$K | Tin (°C) | Tout(°C) |
|---|---|---|---|---|---|---|---|
| Rock type, Sandstone | 0.075 | 2.4 | 0.05377648 | 0.205 | 56.560176 | 35.00 | 25.76 |

(continued)

| Summary Results | Thermal diffusivity (m²/day) | K_ground (W/mK) | R_ground (K/W) | R-total | U (W/m²K) | Tin (°C) | Tout(°C) |
|---|---|---|---|---|---|---|---|
| Rock type, Dense rock | 0.111 | 3.46 | 0.037301605 | 0.189 | 61.492548 | 35.00 | 25.28 |
| Rock type, Heavy soil, Dry | 0.045 | 0.87 | 0.148348911 | 0.300 | 38.728099 | 35.00 | 27.88 |
| Soil type, Coarse 100% sand 1900Kg/m³, 5% moist | 0.094 | 2.8 | 0.046094126 | 0.198 | 58.757893 | 35.00 | 25.54 |
| Soil type, Fine Grain 100% clay 1900Kg/m³, 5% moist | 0.038 | 1.2 | 0.10755296 | 0.259 | 44.824266 | 35.00 | 27.07 |
| Limestone | 0.1019 | 2.54 | 0.050812422 | 0.202 | 57.38835 | 35.00 | 25.69 |

Table 7: Analytical results for 3 soil types (Sandstone, Dense rock, Dry Heavy soil) until 30m depth, Cyprus cooling

| Rock type, Sandstone : 0.075 m^2/day | | | | | | Rock type, Dense rock : 0.111 m^2/day | | | | | |
|---|---|---|---|---|---|---|---|---|---|---|---|
| Depth | Tground | Tin (K) | Tout (K) | Tin (ºC) | Tout (ºC) | Depth | Tground | Tin (K) | Tout (K) | Tin (ºC) | Tout (ºC) |
| 0 | 310.97317 | 308.00 | | 35.00 | | 0 | 310.97317 | 308.00 | | 35.00 | |
| 1 | 302.89027 | 308.01 | 308.01 | 35.01 | 35.01 | 1 | 304.18005 | 308.01 | 308.01 | 35.01 | 35.01 |
| 2 | 296.92203 | 307.99 | 307.99 | 34.99 | 34.99 | 2 | 298.79928 | 308.00 | 308.00 | 35.00 | 35.00 |
| 3 | 293.00403 | 307.94 | 307.94 | 34.94 | 34.94 | 3 | 294.8594 | 307.95 | 307.95 | 34.95 | 34.95 |
| 4 | 290.76817 | 307.88 | 307.88 | 34.88 | 34.88 | 4 | 292.20761 | 307.89 | 307.89 | 34.89 | 34.89 |
| 5 | 289.75235 | 307.81 | 307.81 | 34.81 | 34.81 | 5 | 290.60515 | 307.82 | 307.82 | 34.82 | 34.82 |
| 6 | 289.52232 | 307.74 | 307.74 | 34.74 | 34.74 | 6 | 289.79204 | 307.75 | 307.75 | 34.75 | 34.75 |
| 7 | 289.729 | 307.66 | 307.66 | 34.66 | 34.66 | 7 | 289.52665 | 307.66 | 307.66 | 34.66 | 34.66 |
| 8 | 290.12365 | 307.58 | 307.58 | 34.58 | 34.58 | 8 | 289.60625 | 307.58 | 307.58 | 34.58 | 34.58 |
| 9 | 290.54922 | 307.51 | 307.51 | 34.51 | 34.51 | 9 | 289.87417 | 307.50 | 307.50 | 34.50 | 34.50 |
| 10 | 290.92088 | 307.44 | 307.44 | 34.44 | 34.44 | 10 | 290.21853 | 307.42 | 307.42 | 34.42 | 34.42 |
| 11 | 291.20436 | 307.37 | 307.37 | 34.37 | 34.37 | 11 | 290.56628 | 307.34 | 307.34 | 34.34 | 34.34 |
| 12 | 291.3967 | 307.30 | 307.30 | 34.30 | 34.30 | 12 | 290.87513 | 307.26 | 307.26 | 34.26 | 34.26 |
| 13 | 291.511 | 307.24 | 307.24 | 34.24 | 34.24 | 13 | 291.125 | 307.19 | 307.19 | 34.19 | 34.19 |
| 14 | 291.568 | 307.17 | 307.17 | 34.17 | 34.17 | 14 | 291.313 | 307.12 | 307.12 | 34.12 | 34.12 |
| 15 | 291.585 | 307.11 | 307.11 | 34.11 | 34.11 | 15 | 291.442 | 307.05 | 307.05 | 34.05 | 34.05 |
| 16 | 291.580 | 307.04 | 307.04 | 34.04 | 34.04 | 16 | 291.523 | 306.97 | 306.97 | 33.97 | 33.97 |
| 17 | 291.564 | 306.98 | 306.98 | 33.98 | 33.98 | 17 | 291.567 | 306.90 | 306.90 | 33.90 | 33.90 |
| 18 | 291.546 | 306.91 | 306.91 | 33.91 | 33.91 | 18 | 291.584 | 306.83 | 306.83 | 33.83 | 33.83 |
| 19 | 291.529 | 306.85 | 306.85 | 33.85 | 33.85 | 19 | 291.584 | 306.76 | 306.76 | 33.76 | 33.76 |
| 20 | 291.516 | 306.78 | 306.78 | 33.78 | 33.78 | 20 | 291.574 | 306.70 | 306.70 | 33.70 | 33.70 |
| 21 | 291.506 | 306.72 | 306.72 | 33.72 | 33.72 | 21 | 291.560 | 306.63 | 306.63 | 33.63 | 33.63 |
| 22 | 291.501 | 306.66 | 306.66 | 33.66 | 33.66 | 22 | 291.544 | 306.56 | 306.56 | 33.56 | 33.56 |
| 23 | 291.498 | 306.59 | 306.59 | 33.59 | 33.59 | 23 | 291.517 | 306.49 | 306.49 | 33.49 | 33.49 |
| 24 | 291.496 | 306.53 | 306.53 | 33.53 | 33.53 | 24 | 291.508 | 306.42 | 306.42 | 33.42 | 33.42 |
| 25 | 291.496 | 306.47 | 306.47 | 33.47 | 33.47 | 25 | 291.502 | 306.35 | 306.35 | 33.35 | 33.35 |
| 26 | 291.497 | 306.40 | 306.40 | 33.40 | 33.40 | 26 | 291.499 | 306.29 | 306.29 | 33.29 | 33.29 |
| 27 | 291.498 | 306.34 | 306.34 | 33.34 | 33.34 | 27 | 291.497 | 306.22 | 306.22 | 33.22 | 33.22 |
| 28 | 291.499 | 306.28 | 306.28 | 33.28 | 33.28 | 28 | 291.496 | 306.15 | 306.15 | 33.15 | 33.15 |
| 29 | 291.499 | 306.22 | 306.22 | 33.22 | 33.22 | 29 | 291.496 | 306.09 | 306.09 | 33.09 | 33.09 |
| 30 | 291.500 | 306.16 | 306.16 | 33.16 | 33.16 | 30 | 291.497 | 306.02 | 306.02 | 33.02 | 33.02 |

| Rock type, Heavy soil, Dry : 0.045 m^2/day ||||| 
| Depth | Tground | Tin (K) | Tout (K) | Tin (°C) | Tout (°C) |
| --- | --- | --- | --- | --- | --- |
| 0 | 310.97317 | 308.00 |  | 35.00 |  |
| 1 | 300.9297 | 308.01 | 308.01 | 35.01 | 35.01 |
| 2 | 294.41204 | 307.99 | 307.99 | 34.99 | 34.99 |
| 3 | 290.97481 | 307.95 | 307.95 | 34.95 | 34.95 |
| 4 | 289.67126 | 307.90 | 307.90 | 34.90 | 34.90 |
| 5 | 289.57947 | 307.85 | 307.85 | 34.85 | 34.85 |
| 6 | 290.01566 | 307.80 | 307.80 | 34.80 | 34.80 |
| 7 | 290.56426 | 307.75 | 307.75 | 34.75 | 34.75 |
| 8 | 291.02419 | 307.70 | 307.70 | 34.70 | 34.70 |
| 9 | 291.33353 | 307.65 | 307.65 | 34.65 | 34.65 |
| 10 | 291.50365 | 307.60 | 307.60 | 34.60 | 34.60 |
| 11 | 291.57368 | 307.56 | 307.56 | 34.56 | 34.56 |
| 12 | 291.58468 | 307.51 | 307.51 | 34.51 | 34.51 |
| 13 | 291.568 | 307.46 | 307.46 | 34.46 | 34.46 |
| 14 | 291.545 | 307.42 | 307.42 | 34.42 | 34.42 |
| 15 | 291.524 | 307.37 | 307.37 | 34.37 | 34.37 |
| 16 | 291.509 | 307.33 | 307.33 | 34.33 | 34.33 |
| 17 | 291.501 | 307.28 | 307.28 | 34.28 | 34.28 |
| 18 | 291.497 | 307.24 | 307.24 | 34.24 | 34.24 |
| 19 | 291.496 | 307.19 | 307.19 | 34.19 | 34.19 |
| 20 | 291.497 | 307.15 | 307.15 | 34.15 | 34.15 |
| 21 | 291.498 | 307.10 | 307.10 | 34.10 | 34.10 |
| 22 | 291.499 | 307.06 | 307.06 | 34.06 | 34.06 |
| 23 | 291.500 | 307.01 | 307.01 | 34.01 | 34.01 |
| 24 | 291.500 | 306.97 | 306.97 | 33.97 | 33.97 |
| 25 | 291.500 | 306.92 | 306.92 | 33.92 | 33.92 |
| 26 | 291.500 | 306.88 | 306.88 | 33.88 | 33.88 |
| 27 | 291.500 | 306.84 | 306.84 | 33.84 | 33.84 |
| 28 | 291.500 | 306.79 | 306.79 | 33.79 | 33.79 |
| 29 | 291.500 | 306.75 | 306.75 | 33.75 | 33.75 |
| 30 | 291.500 | 306.70 | 306.70 | 33.70 | 33.70 |

Table 8: Summarized output results during a typical winter day in UK

| Summary Results | Thermal diffusivity (m$^2$/day) | K_ground (W/mK) | R_ground (K/W) | R_total | U (W/m$^2$K) | Tin (°C) | Tout (°C) |
| --- | --- | --- | --- | --- | --- | --- | --- |
| Rock type, Sandstone | 0.075 | 2.4 | 0.05377648 | 0.445 | 26.107605 | 7.00 | 8.92 |
| Rock type. Dense rock | 0.111 | 3.46 | 0.037301605 | 0.428 | 27.111391 | 7.00 | 8.98 |
| Rock type. Heavy soil, Drv | 0.045 | 0.87 | 0.148348911 | 0.540 | 21.53141 | 7.00 | 8.63 |
| Soil type, Coarse 100% sand 1900 Kg/m$^3$, 5%moist | 0.094 | 2.8 | 0.046094126 | 0.437 | 26.566266 | 7.00 | 8.94 |
| Soil type, Fine Grain 100% clay 1900 Kg/m$^3$, 5%moist | 0.038 | 1.2 | 0.10755296 | 0.499 | 23.292608 | 7.00 | 8.74 |
| Limestone | 0.1019 | 2.54 | 0.050812422 | 0.442 | 26.28268 | 7.00 | 8.93 |

Table 9: Analytical results for 3 soil types (Sandstone, Dense rock, Dry Heavy soil) until 30m depth, UK heating

| Rock type, Sandstone : 0.075 m^2/day | | | | | | Rock type, Dense rock : 0.111 m^2/day | | | | | |
|---|---|---|---|---|---|---|---|---|---|---|---|
| Depth | Tground | Tin (K) | Tout (K) | Tin (ºC) | Tout (ºC) | Depth | Tground | Tin (K) | Tout (K) | Tin (ºC) | Tout (ºC) |
| 0 | 279.72 | 280.00 | | 7.00 | | 0 | 279.71907 | 280.00 | | 7.00 | |
| 1 | 283.51 | 280.00 | 280.00 | 7.00 | 7.00 | 1 | 282.94899 | 280.00 | 280.00 | 7.00 | 7.00 |
| 2 | 285.84 | 280.01 | 280.01 | 7.01 | 7.01 | 2 | 285.1578 | 280.01 | 280.01 | 7.01 | 7.01 |
| 3 | 287.05 | 280.02 | 280.02 | 7.02 | 7.02 | 3 | 286.52224 | 280.02 | 280.02 | 7.02 | 7.02 |
| 4 | 287.49 | 280.03 | 280.03 | 7.03 | 7.03 | 4 | 287.24271 | 280.03 | 280.03 | 7.03 | 7.03 |
| 5 | 287.47 | 280.05 | 280.05 | 7.05 | 7.05 | 5 | 287.50964 | 280.04 | 280.04 | 7.04 | 7.04 |
| 6 | 287.22 | 280.06 | 280.06 | 7.06 | 7.06 | 6 | 287.48536 | 280.06 | 280.06 | 7.06 | 7.06 |
| 7 | 286.90 | 280.07 | 280.07 | 7.07 | 7.07 | 7 | 287.29708 | 280.07 | 280.07 | 7.07 | 7.07 |
| 8 | 286.58 | 280.09 | 280.09 | 7.09 | 7.09 | 8 | 287.03694 | 280.09 | 280.09 | 7.09 | 7.09 |
| 9 | 286.33 | 280.10 | 280.10 | 7.10 | 7.10 | 9 | 286.76615 | 280.10 | 280.10 | 7.10 | 7.10 |
| 10 | 286.15 | 280.11 | 280.11 | 7.11 | 7.11 | 10 | 286.52106 | 280.11 | 280.11 | 7.11 | 7.11 |
| 11 | 286.03 | 280.12 | 280.12 | 7.12 | 7.12 | 11 | 286.31947 | 280.13 | 280.13 | 7.13 | 7.13 |
| 12 | 285.96 | 280.13 | 280.13 | 7.13 | 7.13 | 12 | 286.16646 | 280.14 | 280.14 | 7.14 | 7.14 |
| 13 | 285.94 | 280.15 | 280.15 | 7.15 | 7.15 | 13 | 286.059 | 280.15 | 280.15 | 7.15 | 7.15 |
| 14 | 285.93 | 280.16 | 280.16 | 7.16 | 7.16 | 14 | 285.991 | 280.16 | 280.16 | 7.16 | 7.16 |
| 15 | 285.94 | 280.17 | 280.17 | 7.17 | 7.17 | 15 | 285.953 | 280.18 | 280.18 | 7.18 | 7.18 |
| 16 | 285.96 | 280.18 | 280.18 | 7.18 | 7.18 | 16 | 285.936 | 280.19 | 280.19 | 7.19 | 7.19 |
| 17 | 285.97 | 280.19 | 280.19 | 7.19 | 7.19 | 17 | 285.935 | 280.20 | 280.20 | 7.20 | 7.20 |
| 18 | 285.98 | 280.20 | 280.20 | 7.20 | 7.20 | 18 | 285.941 | 280.21 | 280.21 | 7.21 | 7.21 |
| 19 | 285.99 | 280.21 | 280.21 | 7.21 | 7.21 | 19 | 285.952 | 280.22 | 280.22 | 7.22 | 7.22 |
| 20 | 286.00 | 280.22 | 280.22 | 7.22 | 7.22 | 20 | 285.964 | 280.23 | 280.23 | 7.23 | 7.23 |
| 21 | 286.00 | 280.23 | 280.23 | 7.23 | 7.23 | 21 | 285.975 | 280.24 | 280.24 | 7.24 | 7.24 |
| 22 | 286.00 | 280.25 | 280.25 | 7.25 | 7.25 | 22 | 285.984 | 280.26 | 280.26 | 7.26 | 7.26 |
| 23 | 286.00 | 280.26 | 280.26 | 7.26 | 7.26 | 23 | 285.991 | 280.27 | 280.27 | 7.27 | 7.27 |
| 24 | 286.00 | 280.27 | 280.27 | 7.27 | 7.27 | 24 | 285.996 | 280.28 | 280.28 | 7.28 | 7.28 |
| 25 | 286.00 | 280.28 | 280.28 | 7.28 | 7.28 | 25 | 286.000 | 280.29 | 280.29 | 7.29 | 7.29 |
| 26 | 286.00 | 280.29 | 280.29 | 7.29 | 7.29 | 26 | 286.002 | 280.30 | 280.30 | 7.30 | 7.30 |
| 27 | 286.00 | 280.30 | 280.30 | 7.30 | 7.30 | 27 | 286.003 | 280.31 | 280.31 | 7.31 | 7.31 |
| 28 | 286.00 | 280.31 | 280.31 | 7.31 | 7.31 | 28 | 286.003 | 280.32 | 280.32 | 7.32 | 7.32 |
| 29 | 286.00 | 280.32 | 280.32 | 7.32 | 7.32 | 29 | 286.003 | 280.34 | 280.34 | 7.34 | 7.34 |
| 30 | 286.00 | 280.33 | 280.33 | 7.33 | 7.33 | 30 | 286.002 | 280.35 | 280.35 | 7.35 | 7.35 |

| Rock type, Heavy soil, Dry : 0.045 m^2/day | | | | | |
|---|---|---|---|---|---|
| Depth | Tground | Tin (K) | Tout (K) | Tin (ºC) | Tout (ºC) |
| 0 | 279.71907 | 280.00 | | 7.00 | |
| 1 | 284.32405 | 280.00 | 280.00 | 7.00 | 7.00 |
| 2 | 286.65833 | 280.01 | 280.01 | 7.01 | 7.01 |
| 3 | 287.46907 | 280.02 | 280.02 | 7.02 | 7.02 |
| 4 | 287.44421 | 280.03 | 280.03 | 7.03 | 7.03 |
| 5 | 287.07705 | 280.04 | 280.04 | 7.04 | 7.04 |
| 6 | 286.65787 | 280.05 | 280.05 | 7.05 | 7.05 |
| 7 | 286.32054 | 280.06 | 280.06 | 7.06 | 7.06 |
| 8 | 286.10069 | 280.07 | 280.07 | 7.07 | 7.07 |
| 9 | 285.98414 | 280.08 | 280.08 | 7.08 | 7.08 |
| 10 | 285.93946 | 280.09 | 280.09 | 7.09 | 7.09 |
| 11 | 285.93578 | 280.10 | 280.10 | 7.10 | 7.10 |
| 12 | 285.95011 | 280.11 | 280.11 | 7.11 | 7.11 |
| 13 | 285.968 | 280.12 | 280.12 | 7.12 | 7.12 |
| 14 | 285.984 | 280.13 | 280.13 | 7.13 | 7.13 |
| 15 | 285.994 | 280.14 | 280.14 | 7.14 | 7.14 |
| 16 | 286.000 | 280.15 | 280.15 | 7.15 | 7.15 |
| 17 | 286.002 | 280.16 | 280.16 | 7.16 | 7.16 |
| 18 | 286.003 | 280.17 | 280.17 | 7.17 | 7.17 |
| 19 | 286.002 | 280.17 | 280.17 | 7.17 | 7.17 |
| 20 | 286.002 | 280.18 | 280.18 | 7.18 | 7.18 |
| 21 | 286.001 | 280.19 | 280.19 | 7.19 | 7.19 |
| 22 | 286.000 | 280.20 | 280.20 | 7.20 | 7.20 |
| 23 | 286.000 | 280.21 | 280.21 | 7.21 | 7.21 |
| 24 | 286.000 | 280.22 | 280.22 | 7.22 | 7.22 |
| 25 | 286.000 | 280.23 | 280.23 | 7.23 | 7.23 |
| 26 | 286.000 | 280.24 | 280.24 | 7.24 | 7.24 |
| 27 | 286.000 | 280.25 | 280.25 | 7.25 | 7.25 |
| 28 | 286.000 | 280.26 | 280.26 | 7.26 | 7.26 |
| 29 | 286.000 | 280.27 | 280.27 | 7.27 | 7.27 |
| 30 | 286.000 | 280.28 | 280.28 | 7.28 | 7.28 |

Table 10: Summarized output results during a typical summer day in UK

| Summary Results | Thermal diffusivity (m2/day) | K_ground (W/mK) | R_ground (K/W) | R_total | U (W/m2K) | Tin (°C) | Tout (°C) |
|---|---|---|---|---|---|---|---|
| Rock type, Sandstone | 0.075 | 2.4 | 0.053776480 | 0.205 | 56.56018 | 35.00 | 22.60 |

(continued)

| Summary Results | Thermal diffusivity (m²/day) | K_ground (W/mK) | R_ground (K/W) | R_total | U (W/m²K) | Tin (°C) | Tout (°C) |
|---|---|---|---|---|---|---|---|
| Rock type, Dense rock | 0.111 | 3.46 | 0.037301605 | 0.189 | 61.49255 | 35.00 | 21.94 |
| Rock type, Heavy soil, Dry | 0.045 | 0.87 | 0.148348911 | 0.300 | 38.7281 | 35.00 | 25.45 |
| Soil type, Coarse 100% sand 1900 Kg/m³, 5%moist | 0.094 | 2.8 | 0.046094126 | 0.198 | 58.75789 | 35.00 | 22.30 |
| Soil type, Fine Grain 100% clay 1900 Kg/m³, 5%moist | 0.038 | 1.2 | 0.107552960 | 0.259 | 44.82427 | 35.00 | 24.38 |
| Limestone | 0.1019 | 2.54 | 0.050812422 | 0.202 | 57.38835 | 35.00 | 22.49 |

Table 11: Analytical results for 3 soil types (Sandstone, Dense rock, Dry Heavy soil) until 30m depth, UK cooling

| | Rock type, Sandstone : 0.075 m^2/day | | | | | | Rock type, Dense rock : 0.111 m^2/day | | | | |
|---|---|---|---|---|---|---|---|---|---|---|---|
| Depth | Tground | Tin (K) | Tout (K) | Tin (ºC) | Tout (ºC) | Depth | Tground | Tin (K) | Tout (K) | Tin (ºC) | Tout (ºC) |
| 0 | 295.04111 | 308.00 | | 35.00 | | 0 | 295.04111 | 308.00 | | 35.00 | |
| 1 | 291.28834 | 307.95 | 307.95 | 34.95 | 34.95 | 1 | 291.88717 | 307.94 | 307.94 | 34.94 | 34.94 |
| 2 | 288.51737 | 307.88 | 307.88 | 34.88 | 34.88 | 2 | 289.38895 | 307.87 | 307.87 | 34.87 | 34.87 |
| 3 | 286.6983 | 307.80 | 307.80 | 34.80 | 34.80 | 3 | 287.55972 | 307.78 | 307.78 | 34.78 | 34.78 |
| 4 | 285.66022 | 307.71 | 307.71 | 34.71 | 34.71 | 4 | 286.32853 | 307.69 | 307.69 | 34.69 | 34.69 |
| 5 | 285.18859 | 307.61 | 307.61 | 34.61 | 34.61 | 5 | 285.58453 | 307.59 | 307.59 | 34.59 | 34.59 |
| 6 | 285.08179 | 307.52 | 307.52 | 34.52 | 34.52 | 6 | 285.20702 | 307.49 | 307.49 | 34.49 | 34.49 |
| 7 | 285.17775 | 307.43 | 307.43 | 34.43 | 34.43 | 7 | 285.0838 | 307.39 | 307.39 | 34.39 | 34.39 |
| 8 | 285.36098 | 307.33 | 307.33 | 34.33 | 34.33 | 8 | 285.12076 | 307.29 | 307.29 | 34.29 | 34.29 |
| 9 | 285.55857 | 307.24 | 307.24 | 34.24 | 34.24 | 9 | 285.24515 | 307.19 | 307.19 | 34.19 | 34.19 |
| 10 | 285.73112 | 307.15 | 307.15 | 34.15 | 34.15 | 10 | 285.40503 | 307.09 | 307.09 | 34.09 | 34.09 |
| 11 | 285.86274 | 307.06 | 307.06 | 34.06 | 34.06 | 11 | 285.56649 | 306.99 | 306.99 | 33.99 | 33.99 |
| 12 | 285.95204 | 306.97 | 306.97 | 33.97 | 33.97 | 12 | 285.70988 | 306.90 | 306.90 | 33.90 | 33.90 |
| 13 | 286.005 | 306.89 | 306.89 | 33.89 | 33.89 | 13 | 285.826 | 306.80 | 306.80 | 33.80 | 33.80 |
| 14 | 286.031 | 306.80 | 306.80 | 33.80 | 33.80 | 14 | 285.913 | 306.70 | 306.70 | 33.70 | 33.70 |
| 15 | 286.040 | 306.71 | 306.71 | 33.71 | 33.71 | 15 | 285.973 | 306.61 | 306.61 | 33.61 | 33.61 |
| 16 | 286.037 | 306.62 | 306.62 | 33.62 | 33.62 | 16 | 286.011 | 306.52 | 306.52 | 33.52 | 33.52 |
| 17 | 286.030 | 306.54 | 306.54 | 33.54 | 33.54 | 17 | 286.031 | 306.42 | 306.42 | 33.42 | 33.42 |
| 18 | 286.021 | 306.45 | 306.45 | 33.45 | 33.45 | 18 | 286.039 | 306.33 | 306.33 | 33.33 | 33.33 |
| 19 | 286.013 | 306.37 | 306.37 | 33.37 | 33.37 | 19 | 286.039 | 306.24 | 306.24 | 33.24 | 33.24 |
| 20 | 286.007 | 306.28 | 306.28 | 33.28 | 33.28 | 20 | 286.034 | 306.15 | 306.15 | 33.15 | 33.15 |
| 21 | 286.003 | 306.20 | 306.20 | 33.20 | 33.20 | 21 | 286.028 | 306.05 | 306.05 | 33.05 | 33.05 |
| 22 | 286.000 | 306.11 | 306.11 | 33.11 | 33.11 | 22 | 286.021 | 305.96 | 305.96 | 32.96 | 32.96 |
| 23 | 285.999 | 306.03 | 306.03 | 33.03 | 33.03 | 23 | 286.014 | 305.87 | 305.87 | 32.87 | 32.87 |
| 24 | 285.998 | 305.94 | 305.94 | 32.94 | 32.94 | 24 | 286.009 | 305.78 | 305.78 | 32.78 | 32.78 |
| 25 | 285.998 | 305.86 | 305.86 | 32.86 | 32.86 | 25 | 286.005 | 305.69 | 305.69 | 32.69 | 32.69 |
| 26 | 285.999 | 305.78 | 305.78 | 32.78 | 32.78 | 26 | 286.002 | 305.60 | 305.60 | 32.60 | 32.60 |
| 27 | 285.999 | 305.70 | 305.70 | 32.70 | 32.70 | 27 | 286.000 | 305.51 | 305.51 | 32.51 | 32.51 |
| 28 | 285.999 | 305.61 | 305.61 | 32.61 | 32.61 | 28 | 285.999 | 305.42 | 305.42 | 32.42 | 32.42 |
| 29 | 286.000 | 305.53 | 305.53 | 32.53 | 32.53 | 29 | 285.998 | 305.34 | 305.34 | 32.34 | 32.34 |
| 30 | 286.000 | 305.45 | 305.45 | 32.45 | 32.45 | 30 | 285.998 | 305.25 | 305.25 | 32.25 | 32.25 |

| Rock type, Heavy soil, Dry : 0.045 m^2/day | | | | | |
|---|---|---|---|---|---|
| Depth | Tground | Tin (K) | Tout (K) | Tin (ºC) | Tout (ºC) |
| 0 | 295.04111 | 308.00 | | 35.00 | |
| 1 | 290.37807 | 307.96 | 307.96 | 34.96 | 34.96 |
| 2 | 287.35202 | 307.91 | 307.91 | 34.91 | 34.91 |
| 3 | 285.75616 | 307.85 | 307.85 | 34.85 | 34.85 |
| 4 | 285.15094 | 307.79 | 307.79 | 34.79 | 34.79 |
| 5 | 285.10833 | 307.73 | 307.73 | 34.73 | 34.73 |
| 6 | 285.31084 | 307.66 | 307.66 | 34.66 | 34.66 |
| 7 | 285.56555 | 307.60 | 307.60 | 34.60 | 34.60 |
| 8 | 285.77909 | 307.53 | 307.53 | 34.53 | 34.53 |
| 9 | 285.92271 | 307.47 | 307.47 | 34.47 | 34.47 |
| 10 | 286.00169 | 307.41 | 307.41 | 34.41 | 34.41 |
| 11 | 286.03421 | 307.35 | 307.35 | 34.35 | 34.35 |
| 12 | 286.03932 | 307.29 | 307.29 | 34.29 | 34.29 |
| 13 | 286.032 | 307.23 | 307.23 | 34.23 | 34.23 |
| 14 | 286.021 | 307.17 | 307.17 | 34.17 | 34.17 |
| 15 | 286.011 | 307.10 | 307.10 | 34.10 | 34.10 |
| 16 | 286.004 | 307.04 | 307.04 | 34.04 | 34.04 |
| 17 | 286.000 | 306.98 | 306.98 | 33.98 | 33.98 |
| 18 | 285.999 | 306.92 | 306.92 | 33.92 | 33.92 |
| 19 | 285.998 | 306.86 | 306.86 | 33.86 | 33.86 |
| 20 | 285.999 | 306.80 | 306.80 | 33.80 | 33.80 |
| 21 | 285.999 | 306.74 | 306.74 | 33.74 | 33.74 |
| 22 | 285.999 | 306.68 | 306.68 | 33.68 | 33.68 |
| 23 | 286.000 | 306.63 | 306.63 | 33.63 | 33.63 |
| 24 | 286.000 | 306.57 | 306.57 | 33.57 | 33.57 |
| 25 | 286.000 | 306.51 | 306.51 | 33.51 | 33.51 |
| 26 | 286.000 | 306.45 | 306.45 | 33.45 | 33.45 |
| 27 | 286.000 | 306.39 | 306.39 | 33.39 | 33.39 |
| 28 | 286.000 | 306.33 | 306.33 | 33.33 | 33.33 |
| 29 | 286.000 | 306.27 | 306.27 | 33.27 | 33.27 |
| 30 | 286.000 | 306.22 | 306.22 | 33.22 | 33.22 |

The purpose of the distributed controller (hereinafter referred to as distributed controller's) presented here is to monitor and control a plurality of energy systems. The word "distributed" refers to the use of a plurality of such distributed controllers in a single building or/and energy infrastructure with simultaneous communication between each other in order to perform improved optimal actions for energy saving and energy system performance. In addition, it can communicate with other proprietary control devices installed in a plurality of infrastructures to enhance its optimal decision algorithm. In many type of infrastructures such combination will have a much lower cost than any conventional type of centralised controller.

The distributed controller 60 comprises of the following components as illustrated in Fig. 14:

- a plurality of embedded and/or attached and/or connected wired and/or wireless sensors 61 (i.e. temperature, humidity, light, airflow, pressure, occupancy etc.)
- an embedded processor 62 able to perform calculations at a basic level and feature set-points, time scheduling, timers, alarms, trend logs and feedback loops.
- an RF Module 63 utilising proprietary low-power wireless communication protocols (i.e. Lightwave RF, Z-Wave, Zigbee etc.) to enable the controller's bi-directional communication with a plurality of field sensors, distributed controller's and proprietary control devices.
- an input module 64 with a plurality of physical input terminals for connecting the distributed controller with field wired sensors (i.e. current meters, temperature, humidity etc.) which enables the retrieval of various measurements i.e. indoor and outdoor environmental data, energy use data, user behaviour data etc. The input module will include of voltage and/or current analogue signal terminals and dry input digital signal terminals.
- an output module 65 with a plurality of physical output terminals for performing control commands, deriving from: the embedded processor's analysis, the energy saving and adaptive control algorithms. The output module includes voltage and/or current analogue signal terminals, digital relay terminals and a plurality of IR blasters
- a voice command module 66 applying a plurality of noise cancellation microphones able to retrieve predefined voice commands from the users. Commands will lead to the deployment of control commands from the embedded processor to the controller's communication modules and all the connected devices and systems
- a voice notification module 67 applying a plurality of noise cancellation microphones able to retrieve predefined voice commands from the users. Commands will lead to the deployment of control commands from the embedded processor to the controller's communication modules and all the connected devices and systems
- an Ethernet module 68 applying wireless and/or wired Ethernet protocols for the communication of the distributed controller with other distributed controller's, the cloud services and user interface devices
- an embedded 69 or/and external user interface 71, 72 which may include: a screen (such as LCD, LED, etc.) or a touch screen to display alarm messages and possibly metering and system status data (i.e. software version, IP address, connected devices status etc.) and a plurality of physical control buttons to allow possible manual configuration by the user. An external user interface 71, 72 is the same as user interface 69 in Figure 2 described above.

- a local storage module 70 able to store the controller's operation software and data allowing the controller to maintain a sufficient operation level in case of disruption of the internet access and communication with a web-based platform.
- The distributed controller has the capability to connect and communicate with a web-based software 71 able to:
- store data retrieved from the field distributed controller's
- process the retrieved data, applying energy saving, advanced control and adaptive control algorithms and transmits action commands to the distributed controllers

The distributed controller establishes communication with all the other sub-systems i.e. Static Simulator 40, Dynamic Simulator 42 and Performance Module 43 and retrieves information for improved decision making and performance.

Distributed Controller Deployment Scenario

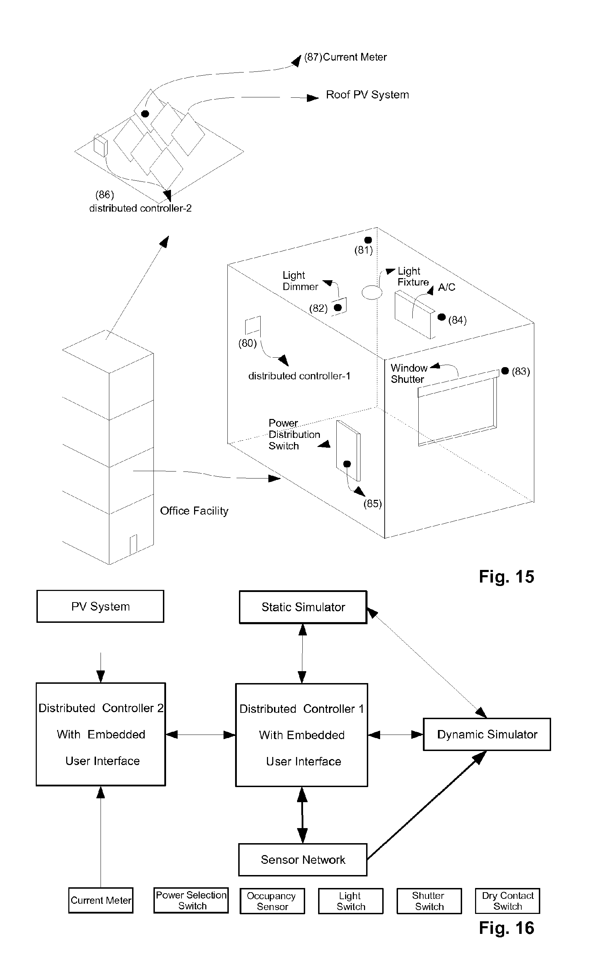

The current scenario examines the deployment of an energy control and monitoring system within an office facility with a PV system installation on the roof (see Fig. 15). The system includes a distributed controller-1 80 installed inside an office area and a distributed controller-2 86 installed within the PV system control panel roof installation. The system topology is as follows:

1. Office Space

- the first distributed controller-1 80 with embedded temperature, humidity and light sensors
- one external wireless occupancy sensor 81
- one external wireless light dimmer 82
- one external wireless shutter switch 83
- one external wireless dry contact switch 84
- one power distribution switch 85

2. PV Control Panel

- the second distributed controller-2 86
- one current meter 87

The connections and communication paths of the examined configuration are presented in Fig. 16.
Initially the static simulator is executed in order to determine the optimal configuration and sizing of the PV system and its components (i.e. PV modules, inverter, sensors etc.). In addition, it simulates at hourly (or less) the energy systems consumption (such as A/C, lights etc.) based on the data inserted by the user and other data retrieved from the web-platform (such as equipment technical data, historical meteorological data etc.). Specific information from the output of the simulation is send and loaded on the distributed controller-2 and Dynamic Simulator for initialisation.
The general principles of the presented scenario are:

a) the distributed controller-2 monitors the operation and energy production of the PV system through the Sensor network and provides the distributed controller-1 with real time data regarding the electricity produced.
b) The distributed controller-1 retrieves in real-time a plurality of sensor data through the sensor network for the electrify consumption of the various energy consuming systems and appliances in the building, user patterns of energy used, user actions etc.
c) the distributed controller-2 manages and optimizes the operation of the energy systems within the facility and takes decisions regarding the electricity source used for powering the facility (Grid or PV System).
d) the sensor data with regards to the user patterns of energy use, user actions are transmitted to the Dynamic Simulator which in turn executes algorithms in order to predict user behaviour or/and forecast energy production. It sends the results either to (a) Static Simulator to improve or/and train the optimal design and sizing algorithm and (b) distributed controller-1 to improve or/and train its optimal decision algorithm
e) the distributed controller-1 sends data to Static Simulator to improve or/and train the optimal design and sizing algorithm. Such data can be PV System production data at different climatic conditions
f) the distributed controller-1 sends data to Dynamic Simulator. Such data may be historical electricity production from PV System in order to forecast the energy production the next period as selected by the user e.g. 1/4/24 hours.

The operation of the distributed controller-1 is described below:

When distributed controller-1 retrieves data from the installation it informs the user for variations between the initial configuration data and the real-time data differences and suggest changes in order to optimise either the operation of the installation or the original Energy System configuration (retrieved from the static simulator). In such a case the distributed controller-1 will sent a request to the Static Simulator to execute again a simulation using the real-time data so as to examine the possibility of upgrading the PV system, if for example in such a case it meets the user selection criteria (better financial results - lower ROI). Then the user decides whether to keep the existing or use the new configuration or even upgrade the existing Energy systems.

The distributed controller-1 initializes the operation and control of devices in a room, applying the following processes:

Control of the A/C:

- switch ON/OFF through the dry contact switch
- temperature adjustments through the embedded IR blaster

The controller adjusts the operation of the A/C based on various parameters such us external temperature, occupancy in the room, time of the day etc.

- Control of the room lighting
- Switch ON/OFF and dim the lighting fixture through the light switch
- Open or Close the window shutter through the shutter switch

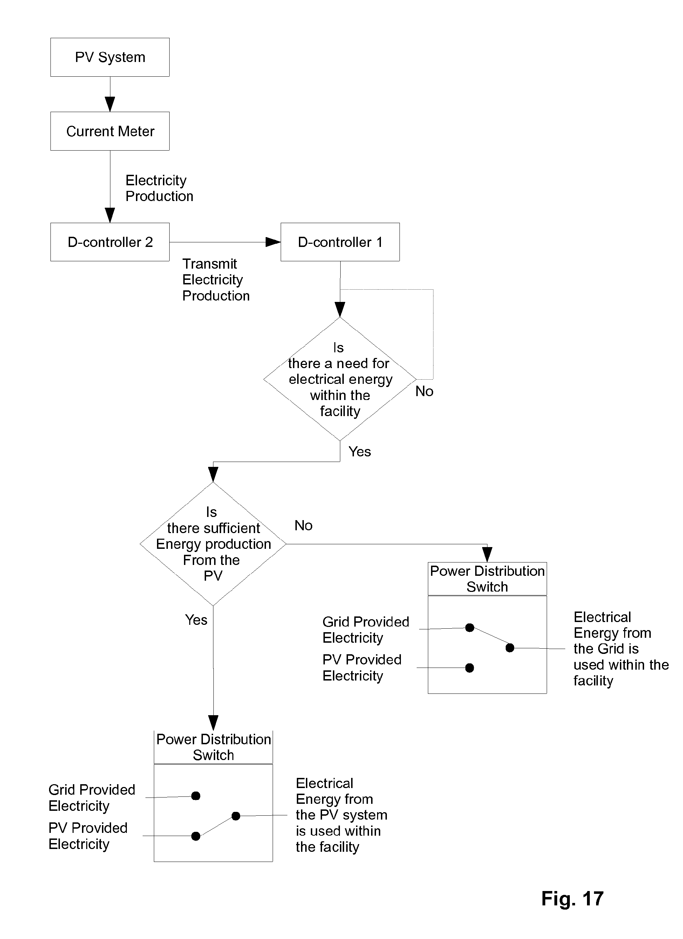

The controller adjusts the lighting level of the room, in order to maintain it at the optimum level deriving either by the data received from the web platform or those entered by the user. This is achieved by regulating the window shutter and the light fixture light level in order to take full advantage of the natural light.
The operation of the distributed controller-2 is illustrated in Fig. 17.
The dynamic simulator 42 is a software that can be used to accurately predict at an hourly basis (or even lower resolution) the use and cost of a resource (electricity, oil, water, etc.) at a building or other extended (neighborhood, outdoor area, etc.) scope.
The dynamic simulator 42 includes the following components:

- the static simulator 40 or an embedded version of the static simulator inside the distributed controller
- a sensor network 44 that collects the real time data needed to train the static simulator and drastically increase its accuracy and suggest any updates of the energy systems configuration.
- a neural training algorithm by means of which the real time data are taken account of to train the static simulator and provide for the x- accurate dynamic simulation.

The sensor data retrieved by the dynamic simulator 42 can be transmitted to the static simulator 40 to improve the optimal selection of energy systems, sub-systems and their components or system's logic, to suggest changes and upgrades of Energy System configurations in order to meet the user criteria. User criteria for example could be the reduction of energy costs, the reduction of carbon emissions, minimum initial energy system investment, minimum return on investment (ROI), highest energy systems production etc.
The Dynamic Simulator can perform disaggregation of the total predicted figure to the device level. If, for example, I predict in the next hour a consumption of 6 KWh electricity, which devices is this due to?
The Dynamic Simulator gives the opportunity to:

- increase the prediction accuracy of RESOURCE consumption by means of neural based processing of the real time consumption data and using them to train the static simulator.
- Dis-aggregate the prediction from the RESOURCE level to the specific devices which contribute to the resource consumption. In this way with very few real time measurements it will be possible to have a very good prediction of the demand at the device level

The dynamic simulator together with the dis-aggregator operate in the four steps with corresponding OUTPUT presented below:

STEP 1: A hourly simulator is first developed based on a building RESOURCE device audit and the definition of use/device profiles.

OUTPUT [1]: A table [8760, 2] (8760= the year hours) predicting the RESOURCE [1] use (KWh, lt, etc.) and [2] cost

STEP 2: A sensor network is installed for metering in the real tine the hourly

- the total resource consumption
- other parameters that may affect the consumption. In the case of an energy RESOURCE these will be the meteorological data, the occupancy of the building and the indoor conditions (thermal comfort).

OUTPUT [2]: A table [8760, n] (8760= the year hours), n = real time parameters monitored

STEP 3: Neural based training methods are applied to use OUTPUT[2] to calibrate and provide for more accurate and dynamic simulation of OUTPUT [1]
OUTPUT [3]: A table [8760, 2](8760= the year hours) with radically enhanced predictions of the RESOURCE [1] use [2] cost

STEP 4: A method is developed for dis-aggregating OUTPUT[3] at the device level and providing for accurate predictions of DEVICE consumption OUTPUT [1] OUTPUT [4]: A table [x, 8760, y] (x= number of devices) with names [1], hour [8760] and accurate predictions [y] of consumption at the DEVICE level.

The Dynamic Simulator can :

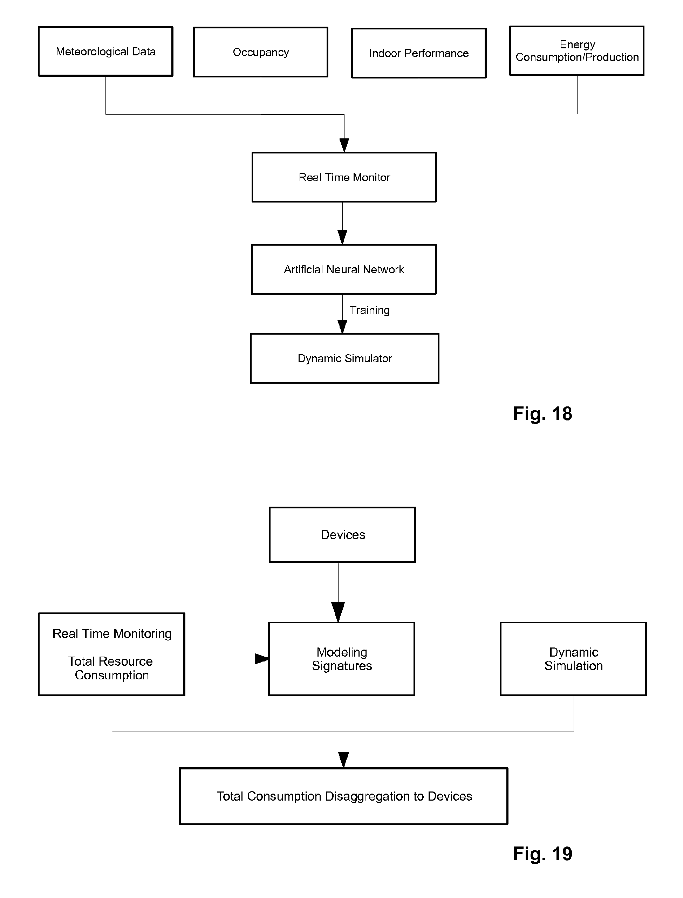

1. Increase the prediction accuracy of RESOURCE consumption by means of neural based processing of the real time consumption data and using them to train the static simulator. This is shown in Fig. 18.
2. Dis-aggregate the prediction from the RESOURCE level to the specific DEVICES which contribute to the RESOURCE consumption. In this way with very few real time measurements it will be possible to have a very good prediction of the demand at the DEVICE level. This is done by means of the DEVICE signatures (i.e. resource consumption profiles). For example a toilet flush has a signature of, lets say, 10 lt/ sec.

This signature concept allows to dis-aggregate the TOTAL resource consumption figures to the device level as depicted in Fig. 19.
The Energy System's Performance module 43 is a software and has the following functionalities:

1. Monitoring the real-time performance of an energy system configuration or sub-system or/and a building in terms of energy efficiency, carbon emissions, indoor air quality, thermal comfort etc. The calculations are primarily based on existing international standards, while where they do not exists, other methodologies are applied. The standards, in most cases, need to be appropriately adapted for in-situ monitoring, since they are usually meant for laboratory use. For this purpose a model is developed for each energy system based on standards. An indicative list of such standards are mentioned in prior-art.
In the case of building carbon emissions, the model is not based on an international standard, since there is not any standard for such calculations, but its development has been based on emission factors defined by EU countries' authorities, for example:

- Building Research Establishment UK 2009 edition (Title, The Government's Standard Assessment Procedure (SAP) for Energy Rating of Dwellings)
- DEFRA, Department for Environment, Food and Rural Affairs, UK, 2012 (Guidelines to Defra's GHG Conversion Factors: Methodology Paper for Transport Emission Factors).
- Lenzen, M., Life cycle energy and greenhouse gas emissions of nuclear energy: A review, Energy Conversion and Management, Vol. 49, pp. 2178-2199,2008.

2. The performance module receives as input for calculation the real time data from the sensor network 44 either through the controller 41 or the distributed controller 48 or directly in the case of the stand-alone version. The appropriate sensors and data acquisition system is chosen according to the specified criteria described in the standard. Most important criteria are the accuracy and uncertainty declared for each sensor and the time interval.
3. The performance module 43 can be used either (a) in combination with a controller 41 or the distributed controller 48, in which case all necessary installation and real-time sensor data can be retrieved either from the performance module database or from the controller database, or (b) as a stand-alone solution for monitoring (without controlling) an energy system. In the last scenario, appropriate hardware guarantees that the necessary sensor data are stored in the performance module database.

4. The possible users of performance module 43 could be the building owner/resident, the renewable systems manufacturers/installers or the possible certification bodies and monitoring authorities.
An Energy System's Performance module software can be installed:

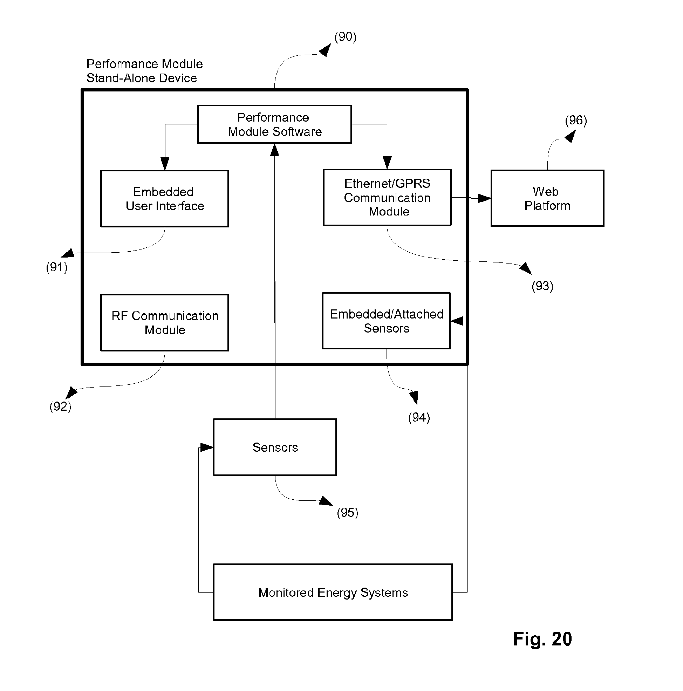

a) on a distributed controller or
b) on any proprietary device with processing, storage and communication capabilities which can be connected with any type of sensors able to transmit their readings using common communication protocols, or
c) on a stand-alone performance module device 90 (see Fig. 20) capable to host the performance module software as well as process, store, receive and transmit data. The performance module device 90 includes the following components (see Fig. 7)

- an embedded and/or web-based user interface 91 for displaying sensor data etc.
- an embedded and/or attached RF communication module 92 for establishing the communication between the performance module hosting device and the field sensors
- an embedded and/or attached communication module 93 for sensor data to be send via Ethernet, GPRS etc. or other means
- a plurality of embedded and/or attached sensors 94 to the performance module device 90 for monitoring the energy system.
- a plurality of wired or wireless sensors 95 for monitoring the energy system. The types of sensors are mentioned in the relevant standards as described in prior art
- a web-platform 96 for displaying and processing results

A direction space occupancy sensor is a device that measures the occupancy in an area (room, floor, whole building). A direction space occupancy sensor consists of a wireless network of direction detection sensors that are installed on every possible point of entrance. A space with a single entrance point requires only one direction detection sensor contrary to spaces of multiple entrance points that require a network of direction detection sensors.
There are 2 cases:

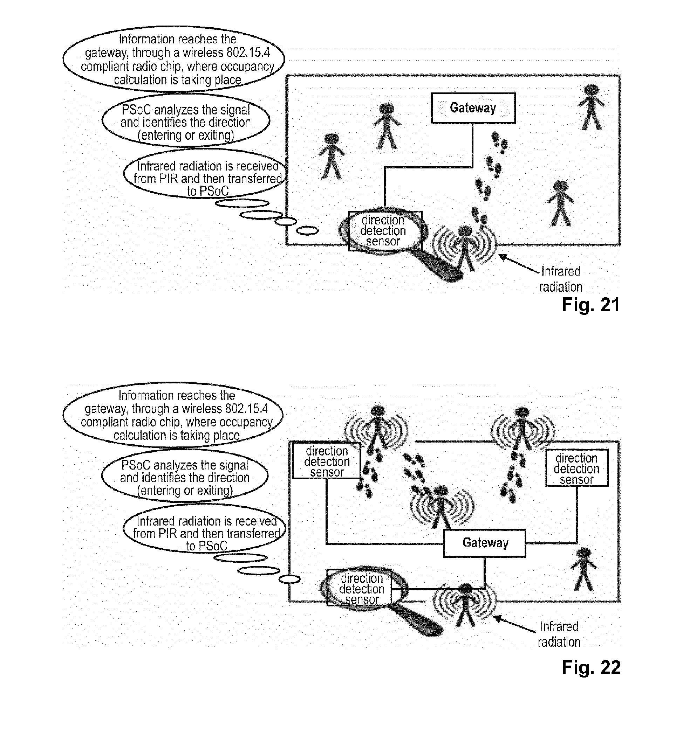

1) The case of a space with a single point of entrance where, in addition, the direction detection sensor can be connected directly to a user interface e.g. PC. In such a case, networking and wireless communications is not necessary. The event is published automatically to an application that monitors, updates and informs, in real time, the target user about the actual population in the space. As an event we consider a human entering or exiting a space. Fig. 21 illustrates the direction space occupancy sensor for a single point of entrance. Note here that if direction detection sensor can be connected directly to a PC it can directly operate like a gateway. In such a case no other gateway is required.
2) In all other cases (multiple points of entrance or single point of entrance where the sensor is unable however to connect directly to the internet ) a network of direction detection sensors will be required. In this case the setup of a DSOS-Gateway is also necessary. The gateway will receive the information from the wireless network of direction detection sensors (multiple entrance) or the unique direction detection sensor (single point entrance) and will update the application about the actual population in the space. In Fig. 22 the direction space occupancy sensor (networked version) for spaces with multiple points of entrance is illustrated.

The current invention gives the opportunity to

- detect direction by a unique PIR element
- calculate occupancy of a space with multiple points of entrance. This is achieved by the wireless communication between all direction detection sensors and the gateway.

According to the invention we can calculate in the real time space occupancy, i.e., the accurate number of people in a space. A direction detection sensor is installed on every point of entrance and identifies the direction of a human (entering or exiting) in the monitored space based on the infrared radiation it emits when entering or exiting the space. Infrared radiation is received from PIR elements and then is transferred to a PSoC (programmable system on chip) that analyses the signal and identifies if someone entered or exited the space.
In the case of a single point of entrance only one direction detection sensor is required in contrast with spaces of multiple points of entrance that require a wireless network of direction detection sensors.
A wireless, 802.15.4 compliant radio chip, equips every direction detection sensor, contributing to the creation of the wireless network. In this network sensors can communicate with the rest sensors and also with the gateway.
Direction detection sensors are also equipped with a Fresnel lens that allows the space occupancy sensor not to consider as an event the entering or exiting of "objects" that are below a certain height (dogs, etc.).

The invention in comparison with the conventional technology is that direction detection sensors are equipped with just one PIR element and with the assistance of a x-low cost PsoC processor can identify direction and not just simple movement. So, fewer sensors are necessary in order to identify occupancy within a space. The invention can also measure occupancy in spaces with multiple points of entrance. Wireless connectivity waives the need and inconvenience of wiring.

The invention will provide also for:

- a better understanding of how efficiently spaces are used through time. Indicators such as kWh/person/m2 will now on have a more real basis because they will be based on actual and not average occupancy
- a better understanding of the actual use of space resources (e.g. meeting rooms, other infrastructure)

The space occupancy sensor consists of a direction detection sensor (case of single point of entrance) or a wireless network of direction detection sensors (case of multiple entrances)

A direction detection sensor includes the following three items:

- A single PIR element (piroelectric infrared) that receives infrared radiation from moving people in the monitored space assisted by fresnel lens.
- A PSoC (programmable system on chip) processor who receives the signal from PIR element, analyses it and identifies the direction of the movement
- A wireless, 802.15.4 compliant radio chip

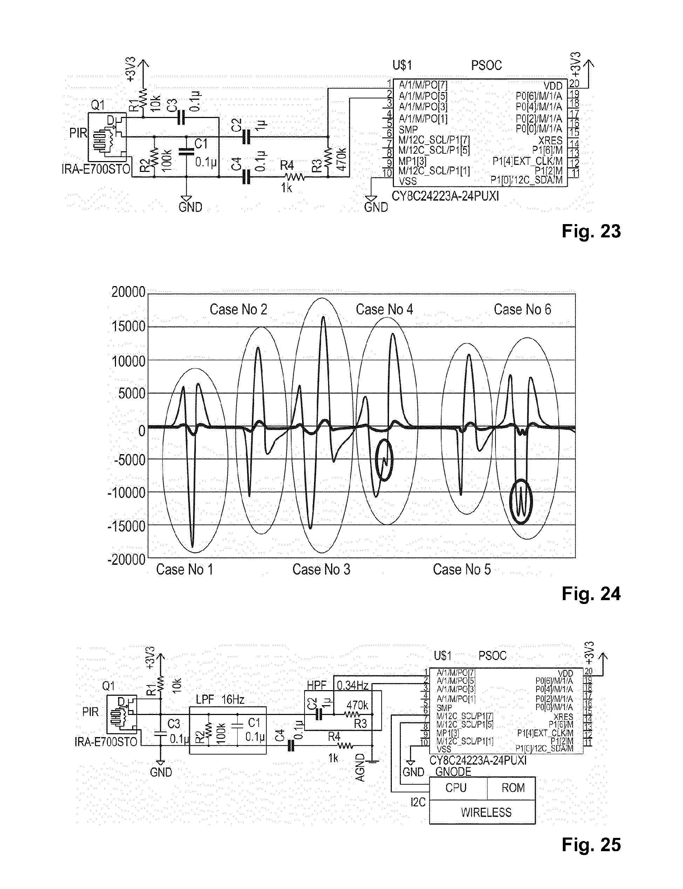

The human body emits infrared radiation and during his movement through a point where a direction detection sensor is installed the PIR element receives the disturbance in thermal radiation in the space and gives a signal to PSoC processor. PsoC processes the digital signal and identifies the direction of the movement. In Fig.24 the connection diagram between PIR element and PSoC processor is presented.

The illustration in Fig. 24 shows how the sensor performs in various, even extreme cases.

- Case No 1: In the very left, a person entering the space is sensed. Note the processed signal that first increases.
- Case No 2: Then a person exits the space is sensed. Now the processed signal first decreases.
- Case No 3: In this case, our person first enters the space and then, changes his mind and exits. Note this pattern which is a combination of the two previous patterns.
- Case No 4: This case describes two people entering the space whose distance between them is 15cm. Note the ellipse to see how the signal changes when the second person follows closely the first, at such a short distance that a signal from the first person is still existing.
- Case No 5: It is the same case with Case No 2.
- Case No 6: It is the same case with the Case No 4 but the distance between people is now much shorter, 5cm, still the processed digital signal can figure out the two persons (note the ellipse)

In the case of multiple points of entrance, direction detection sensors communicate with the gateway through a wireless network since sensors are equipped with a wireless, 802.15.4 compliant radio chip. The gateway updates the web application so user can know the number of people in the monitored space.

In Fig. 25 is a top view of direction detection sensor. Basic components of direction detection sensor, PIR element, PsoC processor and radio chip, are clearly shown.

**Claims**

1. A system for designing, planning, controlling, optimising and evaluating use and production of energy by an energy system in a facility, said facility being selected from a building, a plurality of buildings, an outdoor area or a combination thereof, the system comprising at least one of the following sub-systems:

   - a static simulator (40) for the creation of and/or the selection of an energy system configuration and for the subsequent simulation of the energy consumption and/or production based on the selected configuration;
   - a sensor network (44);
   - a controller (41, 48) obtaining real time information from a sensor network (44) connected to various appliances, and information originating from the static simulator (40) and the dynamic simulator (42) to control the energy management of the system;

- a performance module (43) for monitoring the performance of an energy system based on operational data from the controller (41, 48), wherein the performance module (43) runs a number of applications related to policy conformance (building energy footprint, support for emission trading, etc.) and to real time energy module standard performance evaluation;
- a dynamic simulator (42) predicting at predetermined intervals data corresponding to the consumption and/or production and cost of an energy resource in the energy system, said energy resource being selected from, electricity, oil, gas, water or other energy resource; and
- a user interface.

2. The system according to claim 1, **characterized in that** the controller is at least one controller (41, 48).

3. The system according to claim 1 or 2, **characterized in that** the dynamic simulator comprises a processor and a dynamic simulator software.

4. The system according to claim 4, **characterized in that** the dynamic simulator software is embedded on any one of the other sub-systems (41, 48, 44, 47).

5. The system according to one of the preceding claims, **characterized in that** the static simulator is operably connected to dynamic simulator (42), the controller (41, 48), the performance module (43) and/or the sensor network (44).

6. The system according to claim 5, **characterized in that** the sensor network (44) comprises of a plurality of sensors for

   (a) monitoring energy system parameters, building stock parameters, meteorological parameters, building occupancy, user actions; and
   (b) performing control actions on energy systems, appliances, building components.

7. The system according to one of the preceding claims, further comprising a integration module (46) for establishing communication and data exchange between any one of the other sub-systems the system and third-party systems.

8. The system according to claim 7, **characterized in that** the integration module (46) incorporates open communication protocols.

9. The system according to one of the preceding claims, further comprising a data storage module (45) for storing of data from any of the other sub-systems (40, 41, 42, 43, 44, 46, 48).

10. The system according to claim 9, **characterized in that** the data is stored by the data storage module (45) in a virtual data storage accessible over a communication network and/or in memory system linked to any of the other sub-systems (40, 41, 42, 43, 44, 46, 48).

11. The system according to one of the preceding claims, further comprising at least one external user interface (47) allowing the user to monitor, operate and/or control the system.

12. The system according to claim 11, **characterized in that** the external user interface (47) is integrated into an external devices, being selected from a mobile device, a computer and optionally can be connected through a communication network.

13. A method for designing, planning, controlling, optimising and evaluating the use of energy by an energy system in a facility, said facility being selected from a building, a plurality of buildings, an outdoor area or a combination thereof, the method comprising at least one of the following steps:

   a) selecting by a static simulator (40) in response from a user the optimal configuration and sizing of an energy system configuration comprising a plurality of energy components;
   b) accessing from a database energy performance data relating to each of the plurality of energy components
   c) simulating the consumption and/or production of energy of the energy system by the static simulator (40);
   d) receiving and processing, by a controller (41, 48), information from a sensor network (44) and information originating from the static simulator (40) and the dynamic simulator (42) to control the energy management of the system;
   e) monitoring, by a performance module (43), energy performance parameters associated with the energy system, said energy performance parameters including building stock parameters associated with internal conditions in the facility, meteorological parameters associated with meteorological conditions at the location of the energy system, and building occupancy parameters associated with the level of occupancy of the facility;

f) using the energy performance data and energy performance parameters to predict, by a dynamic simulator (42) at predetermined intervals data corresponding to the consumption and/or production and cost of an resource in the energy system, said resource being selected from, electricity, oil, gas, water or other energy resource;

g) storing, by a storage module (45), data from one or more of the energy performance data, energy performance parameters, usage data and energy system performance data;

h) making available the stored data through an external user interface (47).

14. The method according to claim 13, further comprising the steps of transmitting the sensor data from the sensor network (44) retrieved by the dynamic simulator (42) to the static simulator (40); and training the static simulator (40) using the data received by the dynamic simulator (42).

15. The method according to claim 14, further comprising the step of dis-aggregating the predicted data to specific devices which contribute to the consumption and/or production of an energy resource.

**Fig. 1**

**Fig. 2**

Fig. 3

Fig. 4

Solar Collectors

(50)

Thermal
Storage Tank

(51)

Backup
Energy System

(52)

Water Heating
(Local Use )

(53)

Space Heating
(Local Use)

(54)

**Fig. 5**

```
                          ┌──────────────────┐
                          │   INPUT DATA     │
                          └──────────────────┘
```

| Laboratory Data, EN 12975-2 / | End User Data | Financial Data |

- Collector coefficients of efficiency curve no, a1 a2
- Heat transfer fluid specific heat capacity
- Hot water tank volume
- Hot water tank heat loss coefficient
- Values of normalised draw-off and mixing temperature profiles

- System location
- Collector total aperture area
- Hot Water Tank Volume
- Cold water temperature
- Hot water consumption for a typical 24h period representing the average consumption profile of the users
- Desired Temperature of hot water
- House heated area transmission heat losses
- Central heating designed temperatures (inlet, outlet)
- Cylinder minimum temperature
- Desired room temperature
- Central heating operating months
- Cost of KWh according to the used backup source

- Purchase cost
- Life span
- Inflation
- Interest

```
                          ┌──────────────────┐
                          │  Run Simulation  │
                          └──────────────────┘
```

## Output

- Monthly solar radiation based on hourly meteorological data
- Space heating demand of the building based on the given room temperature per hour and the transmission heat losses W/K of the house
- Hot water demand based on hourly consumption
- Cylinder heat losses
- Useful Solar energy
- Total Energy Collected by the system
- Solar Fraction
- Power cost of the backup source
- Value of solar energy collected and Value of unused solar energy
- Depreciation (payback period)

**Fig. 6**

**Fig. 7**

| Month | Monthly solar radiation Kwh /m2 | Space heating demand kWh | Hot water demand kWh | Cylinder heat losses kWh | Total energy demand kWh | Total Energy Collected KWh | Useful Solar energy kWh | Back-up system Consumption kWh |
|---|---|---|---|---|---|---|---|---|
| January | 119.1502055 | 4363.59 | 155.46197 | 25.75485124 | 4545 | 865.2177 | 865 | 3,680 |
| February | 125.0520567 | 3982.44 | 146.56519 | 23.26244628 | 4152 | 930.2378 | 930 | 3,222 |
| March | 157.0064684 | 3734.01 | 155.64041 | 25.75485124 | 3915 | 1220.593 | 1221 | 2,695 |
| April | 174.3646489 | 1824.27 | 132.40355 | 24.92404958 | 1982 | 1474.18 | 1474 | 507 |
| May | 191.6866402 | 0 | 110.68244 | 25.75485124 | 136 | 1681.411 | 136 | - |
| June | 204.5138114 | 0 | 81.586997 | 24.92404958 | 107 | 1906.614 | 107 | - |
| July | 211.0076396 | 0 | 64.819761 | 25.75485124 | 91 | 2045.262 | 91 | - |
| August | 211.9094709 | 0 | 57.409489 | 25.75485124 | 83 | 2080.279 | 83 | - |
| September | 203.2165627 | 0 | 62.214662 | 24.92404958 | 87 | 1982.123 | 87 | - |
| October | 176.5155543 | 0 | 83.469969 | 25.75485124 | 109 | 1631.447 | 109 | - |
| November | 136.291896 | 1750.84 | 106.15927 | 24.92404958 | 1882 | 1133.554 | 1134 | 748 |
| December | 118.9953623 | 3554.39 | 135.94843 | 25.75485124 | 3716 | 893.2921 | 893 | 2,823 |
| Total | 2029.71 | 19210 | 1292 | 303 | 20805 | 17844 | 7130 | 13675 |

| Month | Power cost € | Cost value of solar energy collected € | Cost value of used solar energy € | Cost value of unused solar energy € | Kg CO2 Savings |
|---|---|---|---|---|---|
| January | 400 | 94 | 94 | 0 | 433 |
| February | 350 | 101 | 101 | 0 | 465 |
| March | 293 | 133 | 133 | 0 | 610 |
| April | 55 | 160 | 160 | 0 | 737 |
| May | 0 | 183 | 15 | 168 | 68 |
| June | 0 | 207 | 12 | 196 | 53 |
| July | 0 | 222 | 10 | 212 | 45 |
| August | 0 | 226 | 9 | 217 | 42 |
| September | 0 | 215 | 9 | 206 | 44 |
| October | 0 | 177 | 12 | 165 | 55 |
| November | 81 | 123 | 123 | 0 | 567 |
| December | 307 | 97 | 97 | 0 | 447 |
| Total | 1486 | 1939 | 775 | 1165 | 3565 |

| Financial analysis - Solar thermal | |
|---|---|
| Purchase cost (EURO) | € 12,000 |
| Life span (years) | 20 |
| Proportional incentives (%) | 55% |
| Fixed incentives: (EURO) | € 6,600 |
| Inflation (%) | 2.5% |
| Interest: (%) | 7.5% |
| Increase of energy price (%) | 5% |
| Annual fuel cost savings (EURO) | € 775 |
| Payback period | 7 |

Fig. 8

**Fig. 9**

**Fig. 10**

Fig. 11

Fig. 12

SUMMER         WINTER

Fig. 13

(62)    (60)

Embedded Processor

Light Sensor

Temperature Sensor    (61)

Humidity Sensor

Occupancy Sensor

(63)

(71)

Adaptive Control

Feedback Loops

Time Scheduling

Web-Based Platform    Timers

Set Points

Smartphone / Tablet    Logic
Application

Alarms

Trend Logs

(72)

RF
Communication Module

(64)

Input Module

Analog (Voltage/Current)

Digital (Dry Contacts)    (65)

Output Module

Analog
(Voltage/Current)

Digital
(Relays)

IR Blaster

(68)

Ethernet Module

Wireless Communication

Wired Communication

(66)

Voice Command Module

(67)

Voice Notification Module

(69)

Embedded User Interface

LCD Screen

Control Buttons    (70)

Local Storage

Fig. 14

(87)Current Meter

Roof PV System

(86)
distributed controller-2

(81)

Light
Dimmer

Light
Fixture

A/C

(82)

(84)

(80)

distributed controller-1

Window
Shutter

(83)

Power
Distribution
Switch

(85)

Office Facility

**Fig. 15**

PV System

Static Simulator

Distributed Controller 2

With Embedded

User Interface

Distributed Controller 1

With Embedded

User Interface

Dynamic Simulator

Sensor Network

Current Meter | Power Selection Switch | Occupancy Sensor | Light Switch | Shutter Switch | Dry Contact Switch

**Fig. 16**

Fig. 17

**Fig. 18**

**Fig. 19**

(90)

Performance Module
Stand-Alone Device

Performance
Module Software

Embedded
User Interface

(91)

Ethernet/GPRS
Communication
Module

Web
Platform

(96)

(93)

RF Communication
Module

Embedded/Attached
Sensors

(92)

(94)

Sensors

(95)

Monitored Energy Systems

**Fig. 20**

Information reaches the
gateway, through a wireless 802.15.4
compliant radio chip, where occupancy
calculation is taking place

PSoC analyzes the signal
and identifies the direction
(entering or exiting)

Infrared radiation is received
from PIR and then transferred
to PSoC

Gateway

direction
detection
sensor

Infrared
radiation

**Fig. 21**

Information reaches the
gateway, through a wireless 802.15.4
compliant radio chip, where occupancy
calculation is taking place

PSoC analyzes the signal
and identifies the direction
(entering or exiting)

Infrared radiation is received
from PIR and then transferred
to PSoC

direction
detection
sensor

direction
detection
sensor

Gateway

direction
detection
sensor

Infrared
radiation

**Fig. 22**

**Fig. 23**

**Fig. 24**

**Fig. 25**

Europäisches
Patentamt

European
Patent Office

Office européen
des brevets

## EUROPEAN SEARCH REPORT

Application Number

EP 13 18 7457

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/013121 A1 (HENZE GREGOR P [US] ET AL) 10 January 2013 (2013-01-10) <br> * figures 3-10 * <br> * paragraphs [0003], [0010], [0014] * <br> * paragraphs [0017] - [0020] * <br> * paragraphs [0033] - [0057] * <br> * paragraphs [0060] - [0086] * <br> * paragraphs [0093] - [0096] * <br> * paragraphs [0102] - [0104] * <br> * paragraphs [0115], [0116], [0125] * | 1-15 | INV. <br> G06Q10/04 <br> G06Q10/06 <br> G06Q50/06 <br> H02J3/14 <br> H02J3/38 |
| X | US 2012/232701 A1 (CARTY RAPHAEL [US] ET AL) 13 September 2012 (2012-09-13) <br> * figures 1-4, 6-9 * <br> * paragraphs [0002] - [0011] * <br> * paragraphs [0013], [0014] * <br> * paragraphs [0028] - [0046] * <br> * paragraphs [0050] - [0073] * <br> * paragraph [0083] * | 1-15 | |

| | |
|---|---|
| | TECHNICAL FIELDS SEARCHED (IPC) |
| | G06Q <br> H02J |

The present search report has been drawn up for all claims

| Place of search | Date of completion of the search | Examiner |
|---|---|---|
| The Hague | 9 April 2014 | Meijs, Koen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 18 7457

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2014

| Patent document cited in search report | Publication date | Patent family member(s) | Publication date |
|---|---|---|---|
| US 2013013121 A1 | 10-01-2013 | US 2013013121 A1<br>WO 2012161804 A1 | 10-01-2013<br>29-11-2012 |
| US 2012232701 A1 | 13-09-2012 | AU 2012225502 A1<br>GB 2502760 A<br>US 2012232701 A1<br>WO 2012122234 A2 | 16-01-2014<br>04-12-2013<br>13-09-2012<br>13-09-2012 |

EPO FORM P0459

For more details about this annex : see Official Journal of the European Patent Office, No. 12/82

**EP 2 858 015 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- The Government's Standard Assessment Procedure (SAP) for Energy Rating of Dwellings. Building Research Establishment UK, 2009
- Guidelines to Defra's GHG Conversion Factors: Methodology Paper for Transport Emission Factors. Department for Environment, Food and Rural Affairs, 2012
- **LENZEN, M.** Life cycle energy and greenhouse gas emissions of nuclear energy: A review. *Energy Conversion and Management,* 2008, vol. 49, 2178-2199